(19) Europäisches Patentamt
European Patent Office
Office européen des brevets

(11) **EP 4 651 603 A1**

(12) **EUROPEAN PATENT APPLICATION**
published in accordance with Art. 153(4) EPC

(43) Date of publication:
**19.11.2025 Bulletin 2025/47**

(21) Application number: **23921784.7**

(22) Date of filing: **15.02.2023**

(51) International Patent Classification (IPC):
*H04W 72/232* (2023.01)

(52) Cooperative Patent Classification (CPC):
**H04W 72/232**

(86) International application number:
**PCT/CN2023/076275**

(87) International publication number:
**WO 2024/168621 (22.08.2024 Gazette 2024/34)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventor: **LIU, Zhe
Dongguan, Guangdong 523860 (CN)**

(74) Representative: **RGTH
Patentanwälte PartGmbB
Neuer Wall 10
20354 Hamburg (DE)**

(54) **WIRELESS COMMUNICATION METHOD, TERMINAL DEVICE, AND NETWORK DEVICE**

(57)     A wireless communication method, a terminal device, and a network device. The method comprises: a terminal device determines the number of bits of a first information domain and/or a second information domain in DCI according to first information, wherein the DCI is used for scheduling one or more uplink transmissions, and the first information domain and/or the second information domain are/is used for determining transmission parameters of the one or more uplink transmissions. The first information comprises at least one of the following: the maximum number of transmission layers associated with a first SRS resource set; the maximum number of transmission layers associated with a second SRS resource set; the maximum number of transmission layers associated with a single transmission reception point (TRP) transmission scheme or a single antenna panel transmission scheme or a TDM transmission scheme; and a first indication information domain used for indicating dynamic switching between a first transmission scheme and a second transmission scheme and/or an SRS resource set associated with an uplink transmission under the first transmission scheme, wherein the uplink transmission under the first transmission scheme comprises one uplink transmission, and uplink transmissions under the second transmission scheme comprise a plurality of uplink transmissions.

FIG. 2

**Description**

**TECHNICAL FIELD**

Embodiments of the present disclosure relate to the field of communication, and in particular, to a wireless communication method, a terminal device and a network device.

**BACKGRUND**

In a new radio (NR) system, multiple transmission schemes may be available for uplink transmission at a terminal device side, such as an uplink transmission scheme based on multiple transmission reception points (TRPs) or multiple antenna panels, and a transmission scheme based on a single TRP or a single panel. Numbers of bits of information fields of pieces of downlink control information (DCI) corresponding to different transmission schemes may be different, which increases difficulty of a terminal device performing blind detection. Therefore, how to determine the number of bits in an information field of the DCI is an urgent problemm that needs to be solved.

**SUMMARY**

The present disclosure provides a wireless communication method, a terminal device and a network device, and the terminal device is enabled to determine a number of bits of an information field in DCI.

In a first aspect, a wireless communication method is provided. The method includes determining, by a terminal device, according to first information, a number of bits of a first information field in downlink control information (DCI) and/or a number of bits of a second information field in the DCI. The DCI is used to schedule one or more uplink transmissions, and the first information field and/or the second information field are used to determine a transmission parameter of the one or more uplink transmissions. The first information includes at least one of: a maximum number of transmission layers associated with a first sounding reference signal (SRS) resource set; a maximum number of transmission layers associated with a second SRS resource set; a maximum number of transmission layers associated with a single-transmission reception point (TRP) transmission scheme, a single-antenna panel transmission scheme or a time division multiplexing (TDM) transmission scheme; or a first indication information field. The first indication information field is used to indicate dynamic switching between a first transmission scheme and a second transmission scheme and/or an SRS resource set associated with an uplink transmission under the first transmission scheme. The uplink transmission under the first transmission scheme includes one uplink transmission, and uplink transmissions under the second transmission scheme include a plurality of uplink transmissions.

In a second aspect, a wireless communication method is provided. The method includes transmitting, by a network device, downlink control information (DCI) to a terminal device. A number of bits of a first information field in the DCI and/or a number of bits of a second information field in the DCI are determined according to first information. The DCI is used to schedule one or more uplink transmissions. The first information field and/or the second information field are used to determine a transmission parameter of the one or more uplink transmissions. The first information includes at least one of: a maximum number of transmission layers associated with a first SRS resource set; a maximum number of transmission layers associated with a second SRS resource set; a maximum number of transmission layers associated with a single-transmission reception point (TRP) transmission scheme, a single-antenna panel transmission scheme or a time division multiplexing (TDM) transmission scheme; or a first indication information field. The first indication information field is used to indicate dynamic switching between a first transmission scheme and a second transmission scheme and/or an SRS resource set associated with an uplink transmission under the first transmission scheme. The uplink transmission under the first transmission scheme includes one uplink transmission, and uplink transmissions under the second transmission scheme include a plurality of uplink transmissions.

In a third aspect, a terminal device is provided. The terminal device is configured to perform the method in the first aspect or various implementations thereof.

Specifically, the terminal device includes a functional module for performing the method in the first aspect or various implementations thereof.

In a fourth aspect, a network device is provided. The network device is configured to perform the method in the second aspect or various implementations thereof

Specifically, the network device includes a functional module for performing the method in the second aspect or various implementations thereof.

In a fifth aspect, a terminal device is provided. The terminal device includes a processor and a memory. The memory is used to store a computer program, and the processor is used to call and run the computer program stored in the memory to perform the method in the first aspect or various implementations thereof.

In a sixth aspect, a network device is provided. The network device includes a processor and a memory. The memory is used to store a computer program, and the processor is used to call and run the computer program stored in the memory to perform the method in the second aspect or various implementations thereof.

In a seventh aspect, a chip is provided. The chip is used to implement the method in any aspect of the first aspect and the second aspect or various implementations thereof.

Specifically, the chip includes a processor. The processor is used to call and run a computer program from a memory, to cause a device equipped with the apparatus to perform the method in any aspect of the first aspect and the second aspect or various implementations thereof.

In an eighth aspect, a computer-readable storage medium is provided. The computer-readable storage medium is used to store a computer program, and the computer program causes a computer to perform the method in any aspect of the first aspect and the second aspect or various implementations thereof.

In a ninth aspect, a computer program product is provided. The computer program product includes computer program instructions, and the computer program instructions cause a computer to perform the method in any aspect of the first aspect and the second aspect or various implementations thereof.

In a tenth aspect, a computer program is provided. The computer program that, when executed on a computer, causes the computer to perform the method in any aspect of the first aspect and the second aspect or various implementations thereof.

Through the above technical solutions, the network device can determine the number of bits of the information field in DCI according to at least one of a maximum number of transmission layers associated with an SRS resource set under a multi-TRP or multi-panel transmission scheme, a transmission scheme configured by the network device, or the maximum number of transmission layers associated with the single-TRP or single-panel transmission scheme. Accordingly, the terminal device can also determine the number of bits of the information field in the DCI according to at least one of the maximum number of transmission layers associated with the SRS resource set under the multi-TRP or multi-panel transmission scheme, the transmission scheme configured by the network device, or the maximum number of transmission layers associated with the single-TRP or single-panel transmission scheme. As a result, it is ensured that the terminal device and the network device have consistent understanding of the number of bits of the information field in the DCI, thereby reducing difficulty of the terminal device performing blind detection.

## BRIEF DESCRIPTION OF THE DRAWINGS

FIG. 1 is a schematic diagram illustrating an architecture of a communication system provided in embodiments of the present disclosure.

FIG. 2 is a schematic interaction diagram illustrating a wireless communication method provided in embodiments of the present disclosure.

FIG. 3 is a schematic diagram of an SDM transmission scheme provided in embodiments of the present disclosure.

FIG. 4 is a schematic diagram of an SFN transmission scheme provided in embodiments of the present disclosure.

FIG. 5 is a schematic block diagram of a terminal device provided in embodiments of the present disclosure.

FIG. 6 is a schematic block diagram of a network device provided in embodiments of the present disclosure.

FIG. 7 is a schematic block diagram of a communication device provided in embodiments of the present disclosure.

FIG. 8 is a schematic block diagram of a chip provided in embodiments of the present disclosure.

FIG. 9 is a schematic block diagram of a communication system provided in embodiments of the present disclosure.

## DETAILED DESCRIPTION

Technical solutions in embodiments of the present disclosure will be described hereafter in combination with accompany drawings in the embodiments of the present disclosure. It is apparent that the described embodiments are merely some of embodiments in the present disclosure, rather than all embodiments. With respect to embodiments in the present disclosure, all of other embodiments obtained by those ordinary skilled in the art without paying any creative effort shall fall within the protection scope of the present disclosure.

The technical solutions in the embodiments of the present disclosure may be applied to various communication systems, such as, a global system of mobile communication (GSM), a code division multiple access (CDMA) system, a wideband code division multiple access (WCDMA) system, a general packet radio service (GPRS) system, a long term evolution (LTE) system, an advanced long term evolution (LTE-A) system, a new radio (NR) system, an evolution system of the NR system, an LTE-based access to unlicensed spectrum (LTE-U) system, an NR-based access to unlicensed spectrum (NR-U) system, a non-terrestrial network (NTN) system, a universal mobile telecommunication system (UMTS), a wireless local area network (WLAN), a wireless fidelity (WiFi) system, and a 5th-generation communication (5G) system or other communication systems.

Generally, a number of connections supported by a conventional communication system is limited and is easy to be implemented. However, with the development of communication technology, a mobile communication system will not only support traditional communication, but also will support, for example, device to device (D2D) communication, machine to machine (M2M) communication, machine type communication (MTC), vehicle to vehicle (V2V) communication, or vehicle to everything (V2X) communication. The embodiments of the present disclosure may further be applicable to these communication systems.

Optionally, the communication system in the embodiments of the present disclosure may be applicable to a carrier aggregation (CA) scenario, a dual connectivity (DC) scenario, or a standalone (SA) networking scenario.

Optionally, the communication system in the embodiments of the present disclosure may be applicable to an unlicensed spectrum, and the unlicensed spectrum may further be considered as a shared spectrum. Alternatively, the communication system in the embodiments of the present disclosure may also be applicable to an authorized spectrum, and the authorized spectrum may further be considered as an unshared spectrum.

Various embodiments are described in the present disclosure in combination with a network device and a terminal device. The terminal device may also be called a user equipment (UE), an access terminal, a user unit, a user station, a mobile station, a mobile platform, a remote station, a remote terminal, a mobile device, a user terminal, a terminal, a radio communication device, a user agent, a user apparatus, etc.

The terminal device may be a station (STA) in WLAN; a cellular phone; a cordless phone; a session initiation protocol (SIP) phone; a wireless local loop (WLL) station; a personal digital assistant (PDA) device; a handheld device or a computing device having a radio communication capability, or other processing device connected to a wireless modem; a vehicle-mounted device; a wearable device; a terminal device in a next-generation communication system (e.g., NR network); a terminal device in a future evolved public land mobile network (PLMN) network, etc.

In the embodiments of the present disclosure, the terminal device may be deployed on land, encompassing indoors or outdoors, in a handheld form, and in a wearable or vehicle-mounted form. Alternatively, the terminal device may also be deployed on water surface (such as a ship). Alternatively, the terminal device may also be deployed in the air (for example, on an airplane, a balloon, and a satellite).

In the embodiments of the present disclosure, the terminal device may be a mobile phone, a tablet personal computer (Pad), a computer having a radio transceiver function, a virtual reality (VR) terminal device, an augmented reality (AR) terminal device, a wireless terminal device in industrial control, a radio terminal device in self-driving, a radio terminal device in a remote medical, a radio terminal device in a smart grid, a radio terminal device in transportation safety, a radio terminal device in a smart city, a radio terminal device in a smart home, etc.

As an example but not limitation, in the embodiments of the present disclosure, the terminal device may also be a wearable device. The wearable device, which may also be called a wearable intelligent device, is a general term of devices that are developed by applying an intelligent design to daily wear items (such as, glasses, gloves, watches, clothes and shoes) using wearable technology that can be worn. The wearable device is a portable device that is worn directly on the body or integrated into clothing or an accessory of a consumer. The wearable device is not only a hardware device, but also realizes powerful function through software support, data interaction and cloud interaction. In a broad sense, the wearable intelligent device include a feature with comprehensive functions, large size, and achievement of complete or some functions without relying on a smart phone (such as a smart watch or smart glasses), and the wearable intelligent device may include devices that only focus on a certain type of application function and need to be used in conjunction with any other device (e.g., smartphone), such as various smart bracelets and smart jewelry for vital sign monitoring.

In the embodiments of the present disclosure, the network device may be a device for communicating with a mobile device. The network device may be an access point (AP) in WLAN, a base station (BTS) in GSM or CDMA, or a base station (NodeB, NB) in WCDMA. The network device may also be an evolved node B (eNB or eNodeB) in LTE, a relay station or an access point, a vehicle-mounted device, a wearable device, a network device (gNB) in NR network, a network device in future evolved PLMN network, or a network device in NTN network.

As an example but not limitation, in the embodiments of the present disclosure, the network device may have a mobile characteristic. For example, the network device may be a mobile device. Optionally, the network device may be a satellite or a balloon station. For example, the satellite may be a low earth orbit (LEO) satellite, a medium earth orbit (MEO) satellite, a geostationary earth orbit (GEO) satellite, or a high elliptical orbit (HEO) satellite. Optionally, the network device may also be a base station deployed on land, water, etc.

In the embodiments of the present disclosure, the network device may provide a service for a cell, and the terminal device may communicate with the network device via a transmission resource (such as, a frequency-domain resource or spectrum resource) utilized by the cell. The cell may be a cell corresponding to the network device (e.g., base station). The cell may belong to a macro base station, or belong to a base station corresponding to a small cell. The small cell here may include a metro cell, a micro cell, a pico cell, a femto cell, etc. These small cells have characteristics of a small coverage and a low transmission power, and are suitable for providing a high-rate data transmission service.

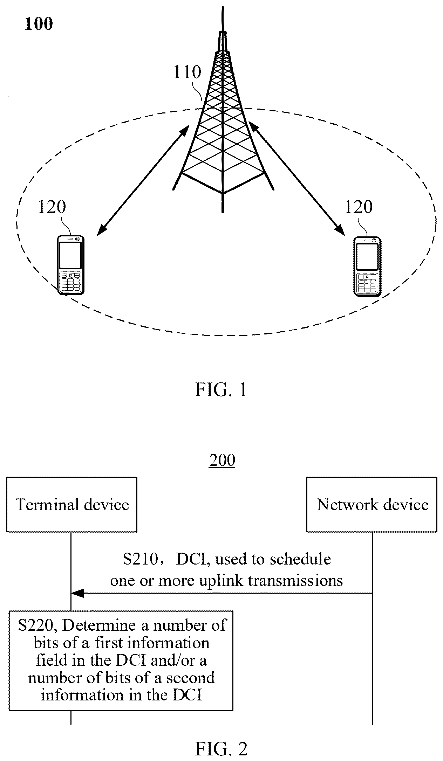

For example, a communication system 100 to which the embodiments of the present disclosure are applicable is illustrated in FIG.1. The communication system 100 may include a network device 110, which may be a device used for communicating with a terminal device 120 (or called a communication terminal or a terminal). The network device 110 may provide communication coverage for a specific geographical area and may communicate with a terminal device located within the coverage area.

FIG. 1 exemplarily illustrates one network device and two terminal devices. Optionally, the communication system 100 may include a plurality of network devices, and there may be other number of terminal devices within a coverage area of each network device, which is not limited in the embodiments of the present disclosure.

Optionally, the communication system 100 may further include other network entities such as a network controller and a mobility management entity, which are not limited in the embodiments of the present disclosure.

It shall be understood that, in the embodiments of the present disclosure, a device having a communication function in the network/system may called a communication device. In an example of the communication system 100 shown in FIG. 1, communication devices may include the network device 110 and the terminal devices 120 that have the communication function, and the network device 110 and the terminal devices 120 may be specific devices described above, which will not be repeated here. The communication devices may further include other devices in the communication system 100, such as a network controller, a mobility management entity and other network entities, which are not limited in the embodiments of the present disclosure.

It shall be understood that the terms "system" and "network" are often used interchangeably herein. The term "and/or" herein is only an association relationship to describe associated objects, which indicates that there may be three kinds of relationships. For example, A and/or B may indicate three cases where: A exists alone, both A and B exist, and B exists alone. Moreover, a character "/" herein generally indicates that related objects before and after the character "/" are in an "or" relationship.

It shall be understood that "indicate/indicating/indicated" in the embodiments of the present disclosure may be a direct indication, may be an indirect indication, or may further represent an association relationship. For example, A indicating B may mean that A directly indicates B, for example, B may be obtained by A. Alternatively, A indicating B may further mean that A indirectly indicates B, for example, A indicates C, and B may be obtained through C. Alternatively, A indicating B may further mean that there is an association relationship between A and B.

In the description of the embodiments of the present disclosure, the term "correspond/corresponding/correspondence" may mean that there is a direct correspondence or indirect correspondence between two elements. Alternatively, "correspond/corresponding/correspondence" may indicate an association relationship between two elements. Alternatively, "correspond/corresponding/correspondence" may indicate a relationship of indicating and being indicated, configuring and being configured, etc.

In the embodiments of the present disclosure, "pre-defined/predetermined" may be implemented by pre-storing corresponding codes, tables or other methods that can be used for indicating related information in devices (for example, the devices including a terminal device and a network device), and the specific implementation is not limited in the present disclosure. For example, "pre-defined/predetermined" may refer to those defined in a protocol.

In the embodiments of the present disclosure, "protocols" may refer to standard protocols in the communication field, which may include, for example, an LTE protocol, an NR protocol and related protocols employed in the future communication system, which are not limited in the present disclosure.

For ease of understanding of technical solutions in the embodiments of the present disclosure, a codebook-based physical uplink shared channel (PUSCH) transmission scheme will be described.

Step 1: the terminal device transmits a sounding reference signal (SRS) used for the codebook transmission to the network device.

Step 2: the network device performs uplink channel detection according to the SRS transmitted by the terminal device, schedules a resource for the terminal device, and determines an SRS resource corresponding to a PUSCH transmission, a number of transmission layers of the PUSCH and a precoding matrix of the PUSCH. The network device indicates the above information to the terminal device via downlink control information (DCI).

Step 3: the terminal device receives the DCI and transmits a PUSCH based on an indication of the DCI.

In the codebook-based PUSCH transmission scheme, the network device indicates, via the DCI, the SRS resource corresponding to the PUSCH, the number of transmission layers of the PUSCH, and the precoding matrix of the PUSCH to the terminal device. Fields in the DCI include a precoding information and number of layers (TPMI) field (used to indicate a precoding matrix and the number of transmission layers) and an SRS resource indicator (SRI) field (used to indicate a specific SRS resource in an SRS resource set).

In some cases, the number of transmission layers of the PUSCH and the precoding matrix of the PUSCH are indicated in a joint coding manner.

For the codebook-based transmission scheme, the terminal device determines a number of bits of the TPMI field according to a configured maximum number of transmission layers (also called a maximum rank, i.e., a value of a configured higher layer parameter (maxRank)).

For ease of understanding of technical solutions in the embodiments of the present disclosure, a non-codebook-based PUSCH transmission scheme will be described.

Step 1: the UE measures a downlink reference signal to obtain a candidate precoding matrix, and transmits an SRS for the non-codebook transmission to the network device after precoding the SRS using the candidate precoding matrix.

Step 2: the network device performs uplink channel detection according to the SRS transmitted by the terminal device, schedules a resource for the UE, and determines an SRS resource corresponding to a beam for the PUSCH transmission. The network device indicates the above information to the terminal device via DCI.

Step 3: the terminal device receives the DCI, and transmits the PUSCH based on an indication of the DCI.

In the non-codebook-based PUSCH transmission scheme, the network device indicates the number of transmission layers of the PUSCH and a specific SRS resource of the SRS resource set to the terminal device via the SRI field in the DCI.

For the non-codebook-based transmission, the terminal device determines the number of bits of the SRI according to a configured maximum number of transmission layers (i.e., a configured higher layer parameter (maxMIMO-Layers)).

For ease of understanding of technical solutions in the embodiments of the present disclosure, a scheme of mapping between a phase tracking reference signal (PTRS) and a demodulation reference signal (DMRS) will be described.

Regarding a codebook-based PUSCH transmission

In some scenarios, PUSCH time-division multiplexing (TDM) repetitions of multi-TRPs are enhanced. Types of the PUSCH repetitions include PUSCH repetition type A and PUSCH repetition type B. Since a number of transmission layers of the PUSCH repetition type A is limited to 1, an additional indication for a mapping between a PTRS port and a DMRS port is not required. A number of transmission layers of the PUSCH repetition type B may be greater than 1.

In a case where the maximum number of ranks (maxrank) is equal to 2 (that is, the maximum number of transmission layers is 2), only one PT-RS port is required. 2 bits in DCI 0-1 or DCI 0-2 are used to indicate an association relationship between the PT-RS port and the DMRS port. As shown in Table 1, a most significant bit (MSB) and a least significant bit (LSB) of the 2 bits correspond to TRP1 and TRP2, respectively. MSB state 0 indicates that a PTRS of a PUSCH transmitted to TRP1 is associated with a first DMRS port, and MSB state 1 indicates that the PTRS of the PUSCH transmitted to TRP1 is associated with a second DMRS port. LSB state 0 indicates that a PTRS of a PUSCH transmitted to TRP2 is associated with the first DMRS port, and LSB state 1 indicates that the PTRS of the PUSCH transmitted to the TRP2 is associated with the second DMRS port.

Table 1

| Value of MSB state | DMRS port | Value of LSB state | DMRS port |
|---|---|---|---|
| 0 | First DMRS port associated with a first SRI, and first precoding information and number of layers field | 0 | First DMRS port associated with a second SRI, and second precoding information and number of layers field |
| 1 | Second DMRS port associated with the first SRI, and the first precoding information and number of layers field | 1 | Second DMRS port associated with the second SRI, and the second precoding information and number of layers field |

In a case where the maxrank is greater than 2 (that is, the maximum number of transmission layers is greater than 2), one or two PTRS ports are required according to the TPMI and the number of transmission layers. 4 bits in DCI 0-1 or DCI 0-2 are used to indicate association between the PTRS port and the DMRS port, and a PTRS-DMRS association field and a second PTRS-DMRS association field are each 2 bits. In a case where the actual number of PTRS ports is determined to be 1 according to the TPMI and the number of transmission layers, a DMRS port associated with this PTRS port is determined based on Table 2. In a case where the actual number of PT-RS ports is determined to be 2 according to the TPMI and the number of transmission layers, the DMRS port associated with these PTRS ports is determined based on Table 3. MSB and LSB in Table 3 are respectively associated with different TRPs. The DMRS port associated with the PTRS port is determined according to states of the MSB and the LSB.

Table 2

| Value of State | DMRS Port |
|---|---|
| 0 | First DMRS port |
| 1 | Second DMRS port |

(continued)

| Value of State | DMRS Port |
|---|---|
| 2 | Third DMRS port |
| 3 | Fourth DMRS port |

Table 3

| Value of MSB state | DMRS Port | Value of LSB state | DMRS Port |
|---|---|---|---|
| 0 | First DMRS port sharing PT-RS port 0 | 0 | First DMRS port sharing PT-RS port 1 |
| 1 | Second DMRS port sharing PT-RS port 0 | 1 | Second DMRS port sharing PT-RS port 1 |

For ease of understanding of the embodiments in the present disclosure, a PUSCH transmission scheme for multi-transmission reception points (TRPs) or multi-antenna panels will be described.

In the NR system, non-coherent transmissions of downlink and uplink based on the multi-TRPs are introduced. A backhaul connection between TRPs may be ideal or non-ideal. In an ideal backhaul, TRPs may exchange information quickly and dynamically. In a non-ideal backhaul, TRPs may only exchange information quasi-statically due to a large delay. In the downlink non-coherent transmission, multi-TRPs may independently schedule a plurality of PUSCH transmissions of a terminal device utilizing different control channels. Alternatively, the multi-TRPs may schedule transmissions for different TRPs utilizing a same control channel, and data of different TRPs use different transmission layers. The latter may only apply to the ideal backhaul situation.

In some scenarios, the terminal device may transmit PUSCH to two TRPs in a TDM manner. The network device may schedule the terminal device to transmit PUSCH to two TRPs via one piece of DCI. The PUSCH transmitted to the two TRPs may be configured with independent transmission parameters, such as a beam and a precoding matric. However, the number of transmission layers of the PUSCH transmitted to the two TRPs is constrained to be the same. The PUSCH transmitted by the terminal device to different TRPs is aligned with corresponding TRP to perform analog beamforming, thereby distinguishing different PUSCHs by virtue of spatial domain, as well as improving spectrum efficiency of the uplink. For the codebook-based PUSCH transmission, a single DCI needs to include two SRI fields. A first precoding information and number of transmission layers field is used to indicate precoding information and number of transmission layers of a PUSCH transmitted to the TRP1, and a number of transmission layers of a PUSCH transmitted to TRP2 is defaulted to be the same as the number of transmission layers indicated by the first precoding information and number of transmission layers field. A first SRI field is used to indicate a beam direction of the PUSCH transmitted to the TRP1, a second SRI field is used to indicate a beam direction of the PUSCH transmitted to the TRP2, and the number of transmission layers is defaulted to be the same as a number of transmission layers indicated by the first SRI. The network device configures 2 SRS resource sets, and the first SRI field and the second SRI field corresponding to the 2 SRS resource sets respectively indicates beam directions of PUSCHs transmitted to the two TRPs. The second precoding information and number of layers field only needs to indicate precoding information, and the number of layers is defaulted to the same as a number of transmission layers indicated by the first precoding information and number of layers field. For the non-codebook based PUSCH transmission, the single DCI needs to include two SRI fields. A first SRI field is used to indicate a beam direction and a number of transmission layers of a PUSCH transmitted to the TRP1, and a second SRI field is used to indicate a beam direction of a PUSCH transmitted to the TRP2. The number of transmission layers of the PUSCH transmitted to TRP2 is defaulted to be the same as the number of transmission layers indicated by the first SRI.

In the related art, the network device shall merely configure one maximum number of transmission layers (maxRank). Numbers of bits of the TPMI field, the SRI field, the PTRS-DMRS association field and a table are determined based on the maxRank. Configuring different numbers of maximum transmission layers for two panels is not supported in the related art, and how to determine the numbers of bits of the TPMI field, the SRI field and the PTRS-DMRS association field is not stipulated in such case. Furthermore, a multi-panel simultaneous transmission scheme may also be switched with a single-panel/TRP transmission scheme. In this case, maximum numbers of transmission layers supported by the multi-panel simultaneous transmission scheme and the single panel/TRP transmission scheme may be different. Therefore, numbers of bits of pieces of DCI corresponding to different transmission schemes will also be different, which will increase the difficulty of the terminal device performing the blind detection.

For ease of understanding of technical solutions in the embodiments of the present disclosure, the technical solutions of the present disclosure will be described in detail hereafter in combination with specific embodiments. The related technologies above, as optional solutions, may be arbitrarily combined with technical solutions of the embodiments in the present disclosure, and these combined solutions shall belong to the protection scope of the embodiments of the present disclosure. The embodiments of the present disclosure include at least part of the following contents.

FIG. 2 is a schematic flowchart of a wireless communication method 200 according to the embodiments of the present disclosure. The method 200 may be performed by the terminal device in the communication system illustrated in FIG. 1. As shown in FIG. 2, the method 200 includes the following contents.

In S210, the network device transmits downlink control information (DCI), and the DCI is used to schedule one or more uplink transmissions.

Accordingly, the terminal device receives the DCI.

In S220, the terminal device determines a number of bits of a first information field in the DCI and/or a number of bits of a second information field in the DCI according to first information. The first information field and/or the second information field are used to determine a transmission parameter of the one or more uplink transmissions.

The first information includes at least one of:

a maximum number of transmission layers associated with a first SRS resource set;
a maximum number of transmission layers associated with a second SRS resource set;
a maximum number of transmission layers associated with a single-TRP transmission scheme, a single-antenna panel transmission scheme, or a TDM transmission scheme; or
a first indication information field, used to indicate dynamic switching between a first transmission scheme and a second transmission scheme (in other words, transmission schemes used for the one or more uplink transmissions) and/or an SRS resource set associated with an uplink transmission under the first transmission scheme, where the uplink transmission under the first transmission scheme includes one uplink transmission, and uplink transmissions under the second transmission scheme include a plurality of uplink transmissions.

In some embodiments, before S210, the method 200 further includes:
the network device determining the number of bits of the first information field in the DCI and/or the number of bits of the second information field in the DCI according to the first information.

That is, the network device and the terminal device determine the number of bits of the first information field and/or the number of bits of the second information field in a same manner, thereby ensuring that the network device and the terminal device have consistent understanding for configuration of the transmission parameter.

A manner for determining the number of bits of the first information field and/or the number of bits of the second information field will be described below from a perspective of the terminal device. An implementation of a network device side is similar, which will not be repeated here for brevity.

In some embodiments, the uplink transmission under the first transmission scheme may include one uplink transmission, the one uplink transmission is associated with the first information field, and the terminal device may determine a transmission parameter of the one uplink transmission according to the first information field.

In some embodiments, the uplink transmissions under the second transmission scheme include a first uplink transmission and a second uplink transmission, the first uplink transmission is associated with the first information field, and the second uplink transmission is associated with the second information field. The terminal device may determine a transmission parameter of the first uplink transmission according to the first information field, and determine transmission parameters of the second uplink transmission according to the second information field.

In some embodiments, the transmission parameter of the uplink transmission may include at least one of:
precoding and number of layers information for the uplink transmission, SRS resource information, or DMRS port information.

In some embodiments, the uplink transmission may include but is not limited to a PUSCH transmission and a PUCCH transmission. The following takes the PUSCH transmission as an example for description, but the present disclosure is not limited thereto.

In some embodiments, the first transmission scheme may include a single-panel transmission scheme or a single-TRP (sTRP) transmission scheme.

In some embodiments, the second transmission scheme may be a multi-panel transmission scheme or a multi-TRP transmission scheme. For example, the second transmission scheme may include but is not limited to a spatial division multiplexing (SDM) transmission scheme and/or a single frequency network (SFN) transmission scheme.

In some embodiments, for the SFN transmission scheme, time-domain resources of a plurality of uplink transmissions are the same, and frequency-domain resources of the plurality of uplink transmissions are the same.

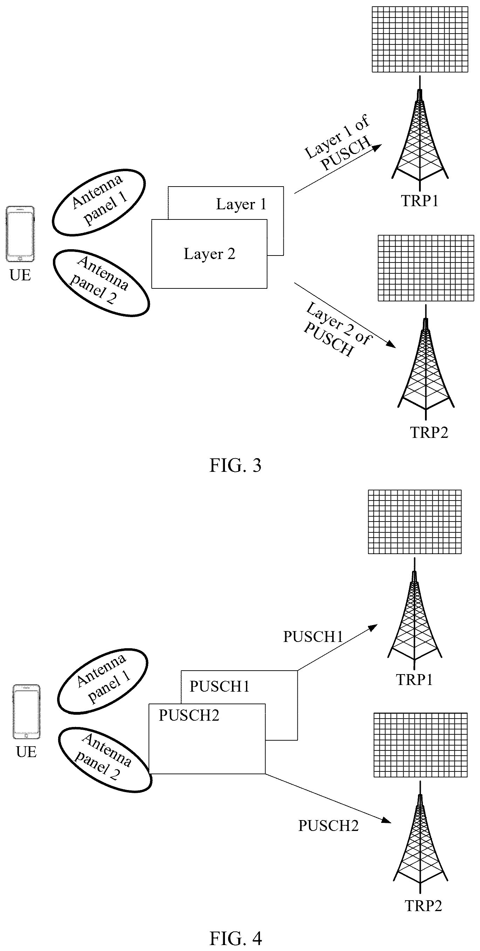

For example, for the SDM transmission scheme, different transmission layer sets of one PUSCH are transmitted to different network devices (e.g., TRPs) via different panels, and uplink resources used to transmit different transmission layer sets of one PUSCH are the same. As shown in FIG. 3, layer 1 of the PUSCH is transmitted via panel 1, and layer 2 of the PUSCH is transmitted via panel 2. Time-domain resources and frequency-domain resources used by the layer 1 of the PUSCH are the same as those used by the layer 2 of the PUSCH.

In some embodiments, for the SFN transmission scheme, the time-domain resources of the plurality of uplink transmissions are the same, the frequency-domain resources of the plurality of uplink transmissions are the same, and DMRS ports of the plurality of uplink transmissions are also the same.

In a specific SFN transmission scheme, repetitions of the PUSCH are transmitted to different TRPs via different panels. As shown in FIG. 4, PUSCH1 is transmitted to TRP1 via the panel1, and PUSCH2 is transmitted to TRP2 via the panel2. The PUSCH1 and the PUSCH2 are transmitted to different TRPs via different panels. Time-domain resources, frequency-domain resources and DMRS ports used by the PUSCH1 are the same as those used by the PUSCH2.

In some embodiments, the maximum number of transmission layers associated with the first SRS resource set and the maximum number of transmission layers associated with the second SRS resource set may be configured by the network device via, for example, radio resource control (RRC) signaling or higher layer parameters.

In some embodiments, the maximum number of transmission layers associated with the first SRS resource set may be a first maximum number of transmission layers, and the maximum number of transmission layers associated with the second SRS resource set may be a second maximum number of transmission layers. The first maximum number of transmission layers may be equal or unequal to the second maximum number of transmission layers.

For example, in a case where the PUSCH transmission scheme is configured as the SDM transmission scheme, the terminal device transmits a first PUSCH and a second PUSCH that are associated with different SRS resource sets utilizing same time-frequency resources, and the first PUSCH and the second PUSCH are different transmission layers of one PUSCH. Therefore, the first maximum number of transmission layers and the second maximum number of transmission layers are maximum numbers of transmission layers associated with the first SRS resource set and the second SRS resource set, respectively.

In some implementations, the first maximum number of transmission layers and the second maximum number of transmission layers may be configured by a same higher layer parameter. That is, the first maximum number of transmission layers is equal to the second maximum number of transmission layers. For example, for the codebook-based PUSCH transmission, the first maximum number of transmission layers and the second maximum number of transmission layers are configured by a higher layer parameter (e.g., maxRank-SDM). For example, for the non-codebook-based PUSCH transmission, the first maximum number of transmission layers and the second maximum number of transmission layers are configured by a higher layer parameter (e.g., maxMIMO-Layers-SDM). Alternatively, the first maximum number of transmission layers and the second maximum number of transmission layers may also be a maximum number of transmission layers supported by the terminal device when employing the SDM transmission scheme.

In some other implementations, the first maximum number of transmission layers and the second maximum number of transmission layers may be configured by different higher layer parameters. In this case, the first maximum number of transmission layers may be equal or unequal to the second maximum number of transmission layers. For example, for the codebook-based PUSCH transmission, the first maximum number of transmission layers is configured by higher layer parameter 1 (e.g., maxRank-SDM1), and the second maximum number of transmission layers is configured by higher layer parameter 2 (e.g., maxRank-SDM2). For example, for the non-codebook-based PUSCH transmission, the first maximum number of transmission layers and the second maximum number of transmission layers are configured by higher layer parameter 1 (maxMIMO-Layers-SDM1) and higher layer parameter 2 (maxMIMO-Layers-SDM2). Alternatively, the first maximum number of transmission layers and the second maximum number of transmission layers may be the maximum number of transmission layers supported by the terminal device when employing the SDM transmission scheme.

In some other embodiments, the maximum number of transmission layers associated with the first SRS resource set and the second SRS resource set is the first maximum number of transmission layers.

For example, in a case where the PUSCH transmission scheme is configured as the SFN transmission scheme, the terminal device transmits the first PUSCH and the second PUSCH that are associated with different SRS resource sets utilizing same time-frequency resources. Content carried by the first PUSCH and content carried by the second PUSCH are the same, and the first maximum number of transmission layers is the maximum number of transmission layers associated with the first SRS resource set and the second SRS resource set. For example, for the codebook-based PUSCH transmission, the first maximum number of transmission layers is configured by a higher layer parameter (e.g., maxRank-SFN). For example, for the non-codebook-based PUSCH transmission, the first maximum number of transmission layers is configured by a higher layer parameter (e.g., maxMIMO-Layers-SFN). Alternatively, the first maximum number of transmission layers may also be a maximum number of transmission layers supported by the terminal device when employing the SFN transmission scheme.

In some embodiments, the first maximum number of transmission layers may be configured by RRC signaling, may be a pre-defined value (e.g., 2), or may be determined according to capability information associated with a specific spatial parameter reported by the terminal device.

In some embodiments, the maximum number of transmission layers associated with the single-TRP transmission scheme, the single antenna panel transmission scheme or the TDM transmission scheme may refer to a maximum number of transmission layers configured by the network device when configuring the terminal device to employ the single-TRP transmission scheme, the single-antenna panel transmission scheme or the TDM transmission scheme. For example, the maximum number of transmission layers may be configured by the RRC signaling or the higher layer parameter.

It shall be noted that, in the embodiments of the present disclosure, the first maximum number of transmission layers, the second maximum number of transmission layers and a third maximum number of transmission layers may be carried in signaling, for example, in same RRC signaling. For example, the first maximum number of transmission layers, the second maximum number of transmission layers and the third maximum number of transmission layers may be carried in RRC signaling SRS resource set (SRS-ResourceSet), PUSCH configuration (PUSCH-Config), or PUSCH serving cell configuration (PUSCH-ServingCellConfig). Alternatively, the first maximum number of transmission layers, the second maximum number of transmission layers and the third maximum number of transmission layers may be carried in different signaling, for example, in different RRC signaling. For example, the first maximum number of transmission layers, the second maximum number of transmission layers and the third maximum number of transmission layers may be carried in at least two of the RRC signaling SRS-ResourceSet, the PUSCH-Config, and the PUSCH-ServingCellConfig.

It shall be understood that, in the embodiments of the present disclosure, the SRS resource set may also be replaced with other spatial parameters, such as transmission configuration indicator (TCI) state information, antenna panel information, TRP information, control resource set (CORESET) group information, other reference signal set information, or beam information.

It shall be understood that, in the embodiments of the present disclosure, the SRS resource set may be associated with a TCI state in an explicit and implicit manner. For example, the first SRS resource set is associated with a first TCI state or a second TCI state. That is, the first TCI state/the second TCI state is applied to all antenna ports for uplink transmission that are associated with the first SRS resource set. And/or, the second SRS resource set is associated with the second TCI state or the first TCI state. That is, the second TCI state/the first TCI state is applied to all antenna ports for uplink transmission that are associated with the second SRS resource set.

In some embodiments, the first indication information field is used to indicate the dynamic switching between the first transmission scheme and the second transmission scheme.

For example, the first indication information field may be used to indicate dynamic switching between the sTRP transmission scheme and the SDM transmission scheme, or dynamic switching between the sTRP transmission scheme and the SFN transmission scheme.

In some embodiments, the first indication information field is carried in the DCI. For example, the first indication information field may be an SRS resource set indicator field.

In some embodiments, the terminal device determining the number of bits of the first information field and/or the number of bits of the second information field according to the first indication information field may include:

determining the number of bits of the first information field and/or the number of bits of the second information field according to whether the DCI includes the first indication information field and/or a state of the first indication information field.

In the embodiments of the present disclosure, whether the DCI includes the first indication information field may be expressed as whether the first indication information field is present, and the two may be replaced with each other. For example, the first indication information field being present may be expressed as the DCI including the first indication information field, and the first indication information field being not present may be expressed as the DCI not including the first indication information field, or the first indication information field being 0 bit.

In some embodiments, the first indication information field being not present may be understood as the first information not including the first indication information field, and the first indication information field being present may be understood as the first information including the first indication information field. The first information may be carried in at least one of RRC signaling, a MAC CE, or DCI. For example, the first information is carried in RRC signaling PUSCH-config, the PUSCH-ServingCellConfig, or the SRS-ResourceSet. For another example, the first information is carried in the MAC CE, which may be an independent MAC CE structure or a dedicated MAC CE structure. Alternatively, the first information may be carried in an existing MAC CE.

In some embodiments, the number of bits of the first indication information field may be determined according to a number of states that need to be indicated. For example, if the first indication information field is used to indicate four states, the first indication information field may be 2 bits. The 2 bits are used to indicate a first state, a second state, a third state and a fourth state. Alternatively, the 2 bits are used to indicate the first state, the second state, the third state and a reserved state. Optionally, the first state may be 00, the second state may be 01, the third state may be 10, and the fourth state or the reserved state may be 11.

In some embodiments, different states of the first indication information field are used to indicate different transmission schemes and/or, that uplink transmissions under different transmission schemes are associated with SRS resource sets.

For example, the first indication information field is used to indicate at least one of:

the first state (e.g., 00), used to indicate the first transmission scheme, and that an uplink transmission under the first transmission scheme is associated with the first SRS resource set;

the second state (e.g., 01), used to indicate the first transmission scheme, and that an uplink transmission under the first transmission scheme is associated with the second SRS resource set;

the third state (e.g., 10), used to indicate the second transmission scheme, that a first uplink transmission under the second transmission scheme is associated with the first SRS resource set, and that a second uplink transmission under the second transmission scheme is associated with the second SRS resource set; or

the fourth state (e.g., 11), used to indicate the second transmission scheme, that the first uplink transmission under the second transmission scheme is associated with the second SRS resource set, and that the second uplink transmission under the second transmission scheme is associated with the first SRS resource set.

For another example, the first indication information field is used to indicate at least one of:

the first state (e.g., 00), used to indicate the first transmission scheme, and that the uplink transmission under the first transmission scheme is associated with the first SRS resource set;

the second state (e.g., 01), used to indicate the first transmission scheme, and that the uplink transmission under the first transmission scheme is associated with the second SRS resource set;

the third state (e.g., 10), used to indicate the second transmission scheme, that the first uplink transmission under the second transmission scheme is associated with the first SRS resource set, and that the second uplink transmission under the second transmission scheme is associated with the second SRS resource set; or

the reserved state (e.g., 11).

As a specific example, the first indication information field is used to indicate the following states:

00: the single-TRP/single-panel transmission scheme; the first SRI field and the first TPMI field being associated with the first SRS resource set; and the second information field being a reserved field or being not present;

01: the single-TRP/single-panel transmission scheme; the first SRI field and the first TPMI field being associated with the second SRS resource set; and the second information field being the reserved field or being not present;

10: the SDM transmission scheme; the first SRI field and the first TPMI field being associated with the first SRS resource set; and the second SRI field and the second TPMI field being associated with the second SRS resource set; and

11: the reserved state.

As another specific example, the first indication information field is used to indicate the following states:

00: the single-TRP/single-panel transmission scheme; the first SRI field and the first TPMI field being associated with the first SRS resource set; and the second information field being a reserved field or being not present;

01: the single-TRP/single-panel transmission scheme; the first SRI field and the first TPMI field being associated with the second SRS resource set; and the second information field being the reserved field or being not present;

10: the SDM transmission scheme; the first SRI field and the first TPMI field being associated with the first SRS resource set; and the second SRI field and the second TPMI field being associated with the second SRS resource set; and

11: the SDM transmission scheme; the first SRI field and the first TPMI field being associated with the second SRS resource set; and the second SRI field and the second TPMI field being associated with the first SRS resource set.

In some embodiments, the second information field being not present may be expressed as the DCI not including the second information field, or the second information field being 0 bit.

It shall be noted that the number of bits of the first indication information field, and the correspondence relationship between various values of the state and meanings are merely examples, and the present disclosure is not limited thereto as long as each meaning corresponds to a unique state.

In some embodiments, the first information field includes at least one of the first TPMI field, the first SRI field, or a first PTRS-DMRS association field.

In some embodiments, the second information field includes at least one of the second TPMI field, the second SRI field, or a second PTRS-DMRS association field.

In some embodiments, the first information field is associated with the first SRS resource set, and the second information field is associated with the second SRS resource set.

For example, in the SDM transmission scheme or the SFN transmission scheme, the first information field is associated with the first SRS resource set, and the second information field is associated with the second SRS resource set.

In some embodiments, the first information field is associated with the second SRS resource set, and the second information field is associated with the first SRS resource set.

For example, in the SDM transmission scheme or the SFN transmission scheme, the first information field is associated with the second SRS resource set, and the second information field is associated with the first SRS resource set.

In some embodiments, the association relationship among the first information field, the second information field and the SRS resource set may be configured or indicated by the network device via, for example, the DCI. Specifically, for example, the association relationship is indicated by the first indication information field, or configured by higher layer signaling. Alternatively, the association relationship may be pre-defined or defaulted. For example, in the SDM transmission scheme or the SFN transmission scheme, the first information field is pre-defined or defaulted to be associated with the first SRS resource set, and the second information field is pre-defined or defaulted to be associated with the second SRS resource set.

In some embodiments, for the first transmission scheme, the DCI includes the first information field, and the number of bits of the second information field is 0, or the second information field is a reserved field. When determining the number of bits of the first information field, reference may be made to the maximum number of transmission layers associated with the first transmission scheme. Alternatively, considering the dynamic switching between transmission schemes, reference may further be made to the maximum number of transmission layers associated with the first transmission scheme and a maximum number of transmission layers associated with one uplink transmission under the second transmission scheme.

In some embodiments, for the second transmission scheme, the DCI includes the first information field and the second information field. When determining the number of bits of the first information field, reference may be made to a maximum number of transmission layers associated with one uplink transmission under the first transmission scheme. Alternatively, considering the dynamic switching between transmission schemes, reference may further be made to the maximum number of transmission layers associated with the first transmission scheme and a maximum number of transmission layers associated with one uplink transmission under the second transmission scheme. When determining the number of bits of the second information field, reference may be made to a maximum number of transmission layers associated with another uplink transmission under the second transmission scheme. Alternatively, considering the dynamic switching between transmission schemes, reference may be made to the maximum number of transmission layers associated with the first transmission scheme and a maximum number of transmission layers associated with another uplink transmission under the second transmission scheme.

The following describes a manner for determining the number of bits of each field of the first information field and the second information field in combination with specific embodiments.

Embodiment 1: determination for the number of bits of the first TPMI field.

In embodiment 1-1, the number of bits of the first TPMI field is determined according to the first maximum number of transmission layers and/or the third maximum number of transmission layers. The first maximum number of transmission layers is the maximum number of transmission layers associated with the first SRS resource set. Alternatively, the first maximum number of transmission layers is the maximum number of transmission layers associated with the first SRS resource set and the second SRS resource set. The third maximum number of transmission layers is the maximum number of transmission layers associated with the single-TRP transmission scheme, the single-antenna panel transmission scheme or the TDM transmission scheme.

Optionally, the embodiment 1-1 may be applicable to the sTRP/panel transmission scheme, the TDM transmission scheme, the SDM transmission scheme and the SFN transmission scheme. That is, the one or more uplink transmissions scheduled by the DCI may include an uplink transmission under the single-TRP transmission scheme, an uplink transmission under the single-antenna panel transmission scheme, an uplink transmission under the TDM transmission scheme, uplink transmissions under the SDM transmission scheme, or uplink transmissions under the SFN transmission scheme.

In the embodiment 1-1, the first indication information field indicates that the first TPMI field is associated with the first SRS resource set, and that the second TPMI field is associated with the second SRS resource set.

In some embodiments, for the SDM transmission scheme, the first maximum number of transmission layers is the maximum number of transmission layers associated with the first SRS resource set. For the SFN transmission scheme, the first maximum number of transmission layers is the maximum number of transmission layers associated with the first SRS resource set and the second SRS resource set.

That is, for the SDM transmission scheme, the number of bits of the first TPMI field is determined according to the first maximum number of transmission layers and/or the third maximum number of transmission layers. The first maximum number of transmission layers is the maximum number of transmission layers associated with the first SRS resource set, and the third maximum number of transmission layers is the maximum number of transmission layers associated with the single-TRP transmission scheme, the single-antenna panel transmission scheme or the TDM transmission scheme.

For the SFN transmission scheme, the number of bits of the first TPMI field is determined according to the first maximum number of transmission layers and/or the third maximum number of transmission layers. The first maximum number of transmission layers is the maximum number of transmission layers associated with the first SRS resource set and the second SRS resource set. The third maximum number of transmission layers is the maximum number of transmission layers associated with the single-TRP transmission scheme, the single-antenna panel transmission scheme or the TDM transmission scheme.

In some embodiments, determining the number of bits of the first TPMI field according to the first maximum number of transmission layers and/or the third maximum number of transmission layers, includes:

in a case where the single-TRP transmission scheme, the single-antenna panel transmission scheme or the TDM transmission scheme is employed, determining the number of bits of the first TPMI field according to the third maximum number of transmission layers; and/or

in a case where the SDM transmission scheme or the SFN transmission scheme is employed, determining the number of bits of the first TPMI field according to the first maximum number of transmission layers.

It shall be understood, in some embodiments of the present disclosure, that the first indication information field is not present, or that the first indication information field is present and the first indication information field indicates the first state or the second state, may be understood as employing the single-TRP transmission scheme, the single-antenna panel transmission scheme or the TDM transmission scheme. The two conditions may be replaced with each other.

It shall be understood that, in some embodiments of the present disclosure, that the first indication information field is present and the first indication information field indicates the third state or the fourth state may be understood as employing the SDM transmission scheme or the SFN transmission scheme. The two conditions may be replaced with each other.

In some embodiments, determining the number of bits of the first TPMI field according to the first maximum number of transmission layers and/or the third maximum number of transmission layers, may include:

in the case where the first indication information field is not present, or the first indication information field is present and the first indication information field indicates the first state or the second state, determining the number of bits of the first TPMI field according to the third maximum number of transmission layers; and/or

in the case where the first indication information field is present and the first indication information field indicates the third state or the fourth state, determining the number of bits of the first TPMI field according to the first maximum number of transmission layers.

In some embodiments, the number of bits of the first TPMI field is determined according to the first maximum number of transmission layers and the third maximum number of transmission layers. For example, the number of bits of the first TPMI field is determined according to a larger value between the first maximum number of transmission layers and the third maximum number of transmission layers.

Example 1-1-1: in the case where the first indication information field is present and the first indication information field indicates the first state or the second state, the first TPMI field includes N1 bits. A state corresponding to the N1 bits is used to indicate precoding information and number of transmission layers information, and N1 is a positive integer.

Example 1-1-2: in the case where the first indication information field is present and the first indication information field indicates the third state or the fourth state, the first TPMI field includes N2 bits and N3 bits. A state corresponding to the N2 bits is used to indicate precoding information and number of transmission layers information, a state corresponding to the N3 bits is a reserved state, and N2 and N3 are positive integers.

N1=N2+N3, N1 is determined according to the larger value between the first maximum number of transmission layers and the third maximum number of transmission layers, and N2 is determined based on a smaller value between the first maximum number of transmission layers and the third maximum number of transmission layers.

In some embodiments, the examples 1-1-1 and 1-1-2 are applicable to a case where the third maximum number of transmission layers is greater than the first maximum number of transmission layers.

That is, in a case where the third maximum number of transmission layers is greater than the first maximum number of transmission layers, the number of bits of the first TPMI field may be determined according to the third maximum number of transmission layers. In this case, if the network device configures the use of the sTRP transmission scheme, the signal-panel transmission scheme or the TDM transmission scheme, the terminal device may consider that the N1 bits determined according to the third maximum number of transmission layers are all valid bits. In this way, the terminal device may obtain precoding information and number of transmission layers information according to the N1 bits. In a case where the network device configures the use of the SDM transmission scheme or the SFN transmission scheme, since the first maximum number of transmission layers is smaller than the third maximum number of transmission layers, the terminal device may consider that the N2 bits determined according to the first maximum number of transmission layers are valid bits and that remaining N3 bits are invalid bits or reserved bits. The terminal device may merely interpret the N2 bits, without interpreting the remaining N3 bits, when obtaining the precoding information and the number of transmission layers information.

Example 1-1-3: in the case where the first indication information field is present and the first indication information field indicates the first state or the second state, the first TPMI field includes N4 bits and N5 bits. A state corresponding to the N4 bits is used to indicate the precoding information and the number of transmission layers information, and a state corresponding to the N5 bits is a reserved state.

Example 1-1-4: in the case where the first indication information field is present and the first indication information field indicates the third state or the fourth state, the first TPMI field includes N6 bits, and a state corresponding to the N6 bits is used to indicate the precoding information and the number of transmission layers information.

N6=N4+N5, N6 is determined according to the larger value between the first maximum number of transmission layers and the third maximum number of transmission layers, and N4 is determined based on the smaller value between the first maximum number of transmission layers and the third maximum number of transmission layers.

In some embodiments, the examples 1-1-3 and 1-1-4 are applicable to a case where the third maximum number of transmission layers is smaller than the first maximum number of transmission layers.

That is, in a case where the third maximum number of transmission layers is smaller than the first maximum number of transmission layers, the number of bits of the first TPMI field may be determined according to the first maximum number of transmission layers. In this case, if the network device configures the use of the SDM transmission scheme or the SFN transmission scheme, the terminal device may consider that the N6 bits determined according to the first maximum number of transmission layers are all valid bits. In this way, the terminal device may obtain the precoding information and the number of transmission layers information according to the N6 bits. When the network device configures the use of the sTRP transmission scheme, the signal-panel transmission scheme or the TDM transmission scheme, since the third maximum number of transmission layers is smaller than the first maximum number of transmission layer, the terminal device may consider that the N4 bits determined according to the third maximum number of transmission layers are valid bits and that the remaining N5 bits are invalid bits or reserved bits. The terminal device may merely interpret N4 bits, without interpreting the remaining N5 bits, when obtaining the precoding information and the number of transmission layers information.

Example 1-1-5: in a case where the third maximum number of transmission layers is equal to the first maximum number of transmission layers, the first TPMI field includes N7 bits. A state corresponding to the N7 bits is used to indicate the precoding information and the number of transmission layers information, and N7 is determined according to the first maximum number of transmission layers or the third maximum number of transmission layers.

In Example 1-2, the number of bits of the first TPMI field is determined according to the second maximum number of transmission layers and/or the third maximum number of transmission layers. The second maximum number of transmission layers is the maximum number of transmission layers associated with the second SRS resource set. Alternatively, the second maximum number of transmission layers is the maximum number of transmission layers associated with the first SRS resource set and the second SRS resource set. The third maximum number of transmission layers is the maximum number of transmission layers associated with the single-TRP transmission scheme, the single-antenna panel transmission scheme or the TDM transmission scheme.

In the embodiment 1-2, the one or more uplink transmissions may include an uplink transmission under the single-TRP transmission scheme, an uplink transmission under the single-antenna panel transmission scheme, an uplink transmission under the TDM transmission scheme, uplink transmissions under the SDM transmission scheme, or uplink transmissions under the SFN transmission scheme.

That is, the embodiment 1-2 may be applicable to the sTRP/single-panel transmission scheme, the TDM transmission scheme, the SDM transmission scheme and SFN transmission scheme.

In the embodiment 1-2, the first indication information field indicates that the first TPMI field is associated with the second SRS resource set, and that the second TPMI field is associated with the first SRS resource set.

In some embodiments, for the SDM transmission scheme, the second maximum number of transmission layers is the maximum number of transmission layers associated with the second SRS resource set. For the SFN transmission scheme, the second maximum number of transmission layers is the maximum number of transmission layers associated with the first SRS resource set and the second SRS resource set.

That is, for the SDM transmission scheme, the number of bits of the first TPMI field is determined according to the second maximum number of transmission layers and/or the third maximum number of transmission layers. The second maximum number of transmission layers is the maximum number of transmission layers associated with the second SRS resource set. The third maximum number of transmission layers is the maximum number of transmission layers associated with the single-TRP transmission scheme, the single-antenna panel transmission scheme, or the TDM transmission scheme.

For the SFN transmission scheme, the number of bits of the first TPMI field is determined according to the second maximum number of transmission layers and/or the third maximum number of transmission layers. The second maximum number of transmission layers is the maximum number of transmission layers associated with the first SRS resource set and the second SRS resource set. The third maximum number of transmission layers is the maximum number of transmission layers associated with the single-TRP transmission scheme, the single-antenna panel transmission scheme, or the TDM transmission scheme.

In some embodiments, determining the number of bits of the first TPMI field according to the second maximum number of transmission layers and/or the third maximum number of transmission layers, include:

in the case where the single-TRP transmission scheme, the single-antenna panel transmission scheme or the TDM transmission scheme is employed, determining the number of bits of the first TPMI field according to the third maximum number of transmission layers; and/or
in the case where the SDM transmission scheme or the SFN transmission scheme is employed, determining the number of bits of the first TPMI field according to the second maximum number of transmission layers.

In some embodiments, determining the number of bits of the first TPMI field according to the second maximum number of transmission layers and/or the third maximum number of transmission layers, may include:

in the case where the first indication information field is not present, or the first indication information field is present and the first indication information field indicates the first state or the second state, determining the number of bits of the first TPMI field according to the third maximum number of transmission layers; and/or
in the case where the first indication information field is present and the first indication information field indicates the third state or the fourth state, determining the number of bits of the first TPMI field according to the second maximum number of transmission layers.

In some embodiments, the number of bits of the first TPMI field is determined according to the second maximum number of transmission layers and the third maximum number of transmission layers. For example, the number of bits of the first TPMI field is determined according to a larger value between the second maximum number of transmission layers and the third maximum number of transmission layers. A specific determination manner refers to example 1-1-1 to example 1-1-5 in the embodiment 1-1, which will not be described here for brevity.

Embodiment 2: a determination for the number of bits of the second TPMI field.

Embodiment 2-1: the number of bits of the second TMPI field is determined according to the second maximum number of transmission layers and/or the first indication information field.

The second maximum number of transmission layers is the maximum number of transmission layers associated with the second SRS resource set.

Optionally, the embodiment 2-1 may be applicable to the SDM transmission scheme. That is, the one or more uplink transmissions scheduled by the DCI may be uplink transmissions under the SDM transmission scheme.

In the embodiment 2-1, the first indication information field indicates that the first TPMI field is associated with the first SRS resource set, and that the second TPMI field is associated with the second SRS resource set.

In some embodiments, determining the number of bits of the second TMPI field according to the second maximum number of transmission layers and/or the first indication information field, includes:

in a case where the single-TRP transmission scheme, the single-antenna panel transmission scheme or the TDM transmission scheme is employed, the number of bits of the second TPMI field is 0, or the second TPMI field is a reserved field; and/or
in a case where the SDM transmission scheme or the SFN transmission scheme is employed, determining the number of bits of the second TPMI field according to the second maximum number of transmission layers.

In some embodiments, determining the number of bits of the second TPMI field according to the second maximum number of transmission layers and/or the first indication information field, includes:

in the case where the first indication information field is not present, or the first indication information field is present and the first indication information field indicates the first state or the second state, the number of bits of the second TPMI field is 0, or the second TPMI field is a reserved field; and/or
in the case where the first indication information field is present and the first indication information field indicates the third state or the fourth state, determining the number of bits of the second TPMI field according to the second maximum number of transmission layers.

Embodiment 2-2: the number of bits of the second TMPI field is determined according to the first maximum number of transmission layers and/or the first indication information field.

The first maximum number of transmission layers is the maximum number of transmission layers associated with the first SRS resource set.

Optionally, the embodiment 2-2 may be applicable to the SDM transmission scheme. That is, the one or more uplink transmissions scheduled by the DCI may be uplink transmissions under the SDM transmission scheme.

In the embodiment 2-2, the first indication information field indicates that the second TPMI field is associated with the first SRS resource set, and that the first TPMI field is associated with the second SRS resource set.

In some embodiments, determining the number of bits of the second TMPI field according to the first maximum number of transmission layers and/or the first indication information field, includes:

in the case where the single-TRP transmission scheme, the single-antenna panel transmission scheme or the TDM transmission scheme is employed, the number of bits of the second TPMI field is 0, or the second TPMI field is a reserved field; and/or

in the case where the SDM transmission scheme or the SFN transmission scheme is employed, determining the number of bits of the second TPMI field according to the first maximum number of transmission layers.

In some embodiments, determining the number of bits of the second TMPI field according to the first maximum number of transmission layers and/or the first indication information field, includes:

in the case where the first indication information field is not present, or the first indication information field is present and the first indication information field indicates the first state or the second state, the number of bits of the second TPMI field is 0, or the second TPMI field is a reserved field; and/or

in the case where the first indication information field is present and the first indication information field indicates the third state or the fourth state, determining the number of bits of the second TPMI field according to the first maximum number of transmission layers.

Embodiment 2-3: the number of bits of the second TMPI field is determined according to the first maximum number of transmission layers and/or the first indication information field.

The first maximum number of transmission layers is the maximum number of transmission layers associated with the first SRS resource set and the second SRS resource set.

Optionally, the embodiment 2-3 is applicable to the SFN transmission scheme. That is, the one or more uplink transmissions scheduled by the DCI may be uplink transmissions under the SFN transmission scheme.

In the embodiment 2-3, the first indication information field indicates that the first TPMI field is associated with the first SRS resource set, and that the second TPMI field is associated with the second SRS resource set. The maximum number of transmission layers associated with the first SRS resource set is the same as the maximum number of transmission layers associated with the second SRS resource set.

In some embodiments, determining the number of bits of the second TMPI field according to the first maximum number of transmission layers and/or the first indication information field, includes:

in the case where the single-TRP transmission scheme, the single antenna panel transmission scheme or the TDM transmission scheme is employed, the number of bits of the second TPMI field is 0, or the second TPMI field is a reserved field; and/or

in the case where the SDM transmission scheme or the SFN transmission scheme is employed, determining the number of bits of the second TPMI field according to the first maximum number of transmission layers.

In some embodiments, determining the number of bits of the second TMPI field according to the first maximum number of transmission layers and/or the first indication information field, includes:

in the case where the first indication information field is not present, or the first indication information field is present and the first indication information field indicates the first state or the second state, the number of bits of the second TPMI field is 0, or the second TPMI field is a reserved field; or

in the case where the first indication information field is present and the first indication information field indicates the third state or the fourth state, determining the number of bits of the second TPMI field according to the first maximum number of transmission layers.

Embodiment 2-4: the number of bits of the second TMPI field is determined according to the second maximum number of transmission layers and/or the first indication information field.

The second maximum number of transmission layers is the maximum number of transmission layers associated with the first SRS resource set and the second SRS resource set.

Optionally, the embodiments 2-4 are applicable to the SFN transmission scheme. That is, the one or more uplink transmissions scheduled by the DCI may be uplink transmissions under the SFN transmission scheme.

In the embodiments 2-4, the first indication information field indicates that the first TPMI field is associated with the second SRS resource set, and that the second TPMI field is associated with the first SRS resource set. The maximum number of transmission layers associated with the first SRS resource set is the same as the maximum number of transmission layers associated with the second SRS resource set.

In some embodiments, determining the number of bits of the second TMPI field according to the second maximum number of transmission layers and/or the first indication information field, includes:

in the case where the single-TRP transmission scheme, the single-antenna panel transmission scheme or the TDM transmission scheme is employed, the number of bits of the second TPMI field is 0, or the second TPMI field is a reserved field; and/or

in the case where the SDM transmission scheme or the SFN transmission scheme is employed, determining the number of bits of the second TPMI field according to the second maximum number of transmission layers.

In some embodiments, determining the number of bits of the second TMPI field according to the second maximum number of transmission layers and/or the first indication information field, includes:

in the case where the first indication information field is not present, or the first indication information field is present and the first indication information field indicates the first state or the second state, the number of bits of the second TPMI field is 0, or the second TPMI field is a reserved field; or

in the case where the first indication information field is present and the first indication information field indicates the third state or the fourth state, determining the number of bits of the second TPMI field according to the second maximum number of transmission layers.

In summary, the embodiments of the present disclosure provide a solution for determining the number of bits of the TPMI field in a case where the first maximum number of transmission layers or the second maximum number of transmission layers is configured. Furthermore, the determination for the number of bits of the first TPMI takes account of both the maximum number of transmission layers associated with the second transmission scheme and the third maximum number of transmission layers associated with the first transmission scheme. The first transmission scheme and the second transmission scheme are switched dynamically. Only the first TPMI field is required for the uplink transmission under the first transmission scheme, thereby ensuring the consistency in terms of the number of bits of the first TPMI field under the two transmission schemes. In this way, the complexity of the terminal device performing the blind detection on the DCI is reduced. In addition, compatibility with existing protocols is ensured.

Embodiment 3: a determination for the number of bits of the first SRI field.

Embodiment 3-1: the number of bits of the first SRI field is determined according to at least one of the first indication information field, the first maximum number of transmission layers, or the third maximum number of transmission layers. The first maximum number of transmission layers is the maximum number of transmission layers associated with the first SRS resource set. Alternatively, the first maximum number of transmission layers is the maximum number of transmission layers associated with the first SRS resource set and the second SRS resource set. The third maximum number of transmission layers is the maximum number of transmission layers associated with the single-TRP transmission scheme, the single-antenna panel transmission scheme or the TDM transmission scheme.

Optionally, the embodiment 3-1 may be applicable to the sTRP/single-panel transmission scheme, the TDM transmission scheme, the SDM transmission scheme and the SFN transmission scheme. That is, the one or more uplink transmissions scheduled by the DCI may include an uplink transmission under the single-TRP transmission scheme, an uplink transmission under the single-antenna panel transmission scheme, an uplink transmission under the TDM transmission scheme, uplink transmissions under the SDM transmission scheme, or uplink transmissions under the SFN transmission scheme.

That is, for the SDM transmission scheme, the number of bits of the first SRI field is determined according to at least one of the first indication information field, the first maximum number of transmission layers, or the third maximum number of transmission layers. The first maximum number of transmission layers is the maximum number of transmission layers associated with the first SRS resource set. The third maximum number of transmission layers is the maximum number of transmission layers associated with the single-TRP transmission scheme, the single-antenna panel transmission scheme or the TDM transmission scheme.

For the SFN transmission scheme, the number of bits of the first SRI field is determined based on at least one of the first indication information field, the first maximum number of transmission layers, or the third maximum number of transmission layers. The first maximum number of transmission layers is the maximum number of transmission layers associated with the first SRS resource set and the second SRS resource set. The third maximum number of transmission layers is the maximum number of transmission layers associated with the single-TRP transmission scheme, the single-antenna panel transmission scheme or the TDM transmission scheme.

In the embodiment 3-1, the first indication information field indicates that the first SRI field is associated with the first SRS resource set, and that the second SRI field is associated with the second SRS resource set.

Example 3-1-1: determining the number of bits of the first SRI field according to at least one of the first indication information field, the first maximum number of transmission layers, or the third maximum number of transmission layers, may include:

in a case where the network device does not indicate the transmission scheme, determining, by the terminal device, the number of bits of the first SRI field according to a number of SRS resources in an SRS resource set configured by the network device via higher layer signaling; and/or

in a case where the network device indicates the transmission scheme, determining, by the terminal device, the number of bits of the first SRI field according to a number of SRS resources in an SRS resource set associated with uplink transmission under the transmission scheme indicated by the network device.

Example 3-1-2: determining the number of bits of the first SRI field according to at least one of the first indication information field, the first maximum number of transmission layers, or the third maximum number of transmission layers, may include:

in a case where the first indication information field is present, determining the number of bits of the first SRI field according to a number of SRS resources that are configured in an SRS resource set indicated by the first indication information field; or

in a case where the first indication information field is not present, determining the number of bits of the first SRI field according to the number of SRS resources that are configured in the SRS resource set configured by the higher layer signaling.

Optionally, the example 3-1-1 and the example 3-1-2 may be applicable to codebook-based uplink transmission. That is, the one or more uplink transmissions scheduled by the DCI may be codebook-based uplink transmissions.

In some embodiments, a case that a higher layer parameter txConfig is configured as the codebook may be considered as the codebook-based uplink transmission. In the case, the number of bits of the first SRS field may be

$\left\lceil \log_2\left(N_{SRS\text{-resource}}\right)\right\rceil$ . $N_{SRS\text{-resource}}$ represents the number of SRS resources in the SRS resource set indicated by the first indication information field. Alternatively, $N_{SRS\text{-resource}}$ represents the number of SRS resources in the SRS resource set configured by the higher layer signaling. $\lceil\ \rceil$ represents rounding up.

Example 3-1-3: determining the number of bits of the first SRI field according to at least one of the first indication information field, the first maximum number of transmission layers, or the third maximum number of transmission layers, may include:

in a case where the network device indicates the first transmission scheme, determining, by the terminal device, the number of bits of the first SRI field according to the number of SRS resources in the SRS resource set associated with the uplink transmission under the first transmission scheme indicated by the network device and the maximum number of transmission layers associated with the first transmission scheme (i.e., the third maximum number of transmission layers); and/or

in a case where the network device indicates the second transmission scheme, determining, by the terminal device, the number of bits of the first SRI field according to the number of SRS resources in the SRS resource set associated with the first uplink transmission under the second transmission scheme indicated by the network device and the maximum number of transmission layers associated with the first uplink transmission under the second transmission scheme; and/or

in a case where the network device does not indicate a transmission scheme, determining, by the terminal device, the number of bits of the first SRI field according to the number of SRS resources in the SRS resource set configured by the network device via higher layer signaling and the maximum number of transmission layers associated with the first transmission scheme (i.e., the third maximum number of transmission layers).

Example 3-1-4: determining the number of bits of the first SRI field according to at least one of the first indication information field, the first maximum number of transmission layers, or the third maximum number of transmission layers, may include:

in a case where the first indication information field is present and the first indication information field indicates the first state or the second state, determining the number of bits of the first SRI field according to the number of SRS resources that are configured in the SRS resource set indicated by the first indication information field and the third maximum number of transmission layers; and/or

in a case where the first indication information field is present and the first indication information field indicates the third state or the fourth state, determining the number of bits of the first SRI field according to the number of SRS resources that are configured in the SRS resource set indicated by the first indication information field and the first maximum number of transmission layers; and/or

in a case where the first indication information field is not present, determining the number of bits of the first SRI field according to the number of SRS resources that are configured in the SRS resource set configured by higher layer signaling and the third maximum number of transmission layers.

Optionally, the example 3-1-3 and the example 3-1-4 may be applicable to the non-codebook-based uplink transmission. That is, the one or more uplink transmissions scheduled by the DCI may be non-codebook-based uplink transmissions.

Example 3-1-5: the number of bits of the first SRI field is determined according to the larger value between the first maximum number of transmission layers and the third maximum number of transmission layers.

As an example, in the case where the first indication information field is present and the first indication information field indicates the first state or the second state, the first SRI field includes M1 bits, and a state corresponding to the M1 bits is used to indicate one or more SRS resources, M1 being a positive integer; or

in the case where the first indication information field is present and the first indication information field indicates the third state or the fourth state, the first SRI field includes M2 bits and M3 bits, where a state corresponding to the M2 bits is used to indicate one or more SRS resources, and a state corresponding to the M3 bits is a reserved state, M2 and M3 being positive integers.

M1=M2+M3, M1 is determined according to the larger value between the first maximum number of transmission layers and the third maximum number of transmission layers, and M2 is determined based on the smaller value between the first maximum number of transmission layers and the third maximum number of transmission layers.

This example may be applicable to the case where the third maximum number of transmission layers is greater than the first maximum number of transmission layers.

That is, in the case where the third maximum number of transmission layers is greater than the first maximum number of transmission layers, the number of bits of the first SRI may be determined according to the third maximum number of transmission layers. In the case, if the network device configures the use of the sTRP transmission scheme, the single-panel transmission scheme or the TDM transmission scheme, the terminal device may consider that the M1 bits determined based on the third maximum number of transmission layers are all valid bits. In this way, the terminal device may obtain SRS resource information based on the M1 bits. In a case where the network device configures the use of the SDM transmission scheme or the SFN transmission scheme, since the first maximum number of transmission layers is smaller than the third maximum number of transmission layers, the terminal device may consider that the M2 bits determined based on the first maximum number of transmission layers are valid bits and that the remaining M3 bits are invalid bits or reserved bits. The terminal device may merely interpret the M2 bits, without interpreting the remaining M3 bits, when obtaining the SRS resource information.

As another example, in the case where the first indication information field is present and the first indication information field indicates the first state or the second state, the first SRI field includes M4 bits and M5 bits, where a state corresponding to the M4 bit is used to indicate one or more SRS resources, and a state corresponding to the M5 bit is a reserved state; or

in the case where the first indication information field is present and the first indication information field indicates the third state or the fourth state, the first SRI field includes M6 bits, and a state corresponding to the M6 bits is used to indicate one or more SRS resources.

M6=M4+M5, M6 is determined according to the larger value between the first maximum number of transmission layers and the third maximum number of transmission layers, and M4 is determined based on the smaller value between the first maximum number of transmission layers and the third maximum number of transmission layers.

This example may be applicable to the case where the third maximum number of transmission layers is smaller than the first maximum number of transmission layers.

That is, in the case where the third maximum number of transmission layers is smaller than the first maximum number of transmission layers, the number of bits of the first TPMI field may be determined according to the first maximum number of transmission layers. In the case, if the network device configures the use of the SDM transmission scheme or the SFN transmission scheme, the terminal device may consider that the N6 bits determined based on the first maximum number of transmission layers are all valid bits. The terminal device may obtain precoding information and number of transmission layers information according to the N6 bits. In a case where the network device configures the use of the sTRP transmission scheme, the single-panel transmission scheme or the TDM transmission scheme, since the third maximum number of transmission layers is smaller than the first maximum number of transmission layers, the terminal device may consider that the N4 bits determined based on the third maximum number of transmission layers are valid bits and that the remaining N5 bits are invalid bits or reserved bits. The terminal device may merely interpret the N4 bits, without interpreting the remaining N5 bits, when obtaining the precoding information and the number of transmission layers information.

As another example, in a case where the third maximum number of transmission layers is equal to the first maximum number of transmission layers, and the first indication information field is present and the first indication information field indicates the first state, the second state, the third state or the fourth state, the first SRI field includes M7 bits. A state corresponding to the M7 bits is used to indicate one or more SRS resources, and M7 is determined according to the first maximum number of transmission layers or the third maximum number of transmission layers.

Example 3-2: the number of bits of the first SRI field is determined according to at least one of the first indication information field, the second maximum number of transmission layers, or the third maximum number of transmission layers. The second maximum number of transmission layers is the maximum number of transmission layers associated with the second SRS resource set. Alternatively, the second maximum number of transmission layers is the maximum number of transmission layers associated with the first SRS resource set and the second SRS resource set. The third maximum number of transmission layers is the maximum number of transmission layers associated with the single-TRP transmission scheme, the single-antenna panel transmission scheme or the TDM transmission scheme.

Optionally, the embodiment 3-2 may be applicable to the sTRP/single-panel transmission scheme, the TDM transmission scheme, the SDM transmission scheme and the SFN transmission scheme. That is, the one or more uplink transmissions scheduled by the DCI may include an uplink transmission under the single-TRP transmission scheme, an uplink transmission under the single-antenna panel transmission scheme, an uplink transmission under the TDM transmission scheme, uplink transmissions under the SDM transmission scheme, or uplink transmissions under the SFN transmission scheme.

That is, for the SDM transmission scheme, the number of bits of the first SRI field is determined according to at least one of the first indication information field, the second maximum number of transmission layers, or the third maximum number of transmission layers. The second maximum number of transmission layers is the maximum number of transmission layers associated with the second SRS resource set. The third maximum number of transmission layers is the maximum number of transmission layers associated with the single-TRP transmission scheme, the single-antenna panel transmission scheme or the TDM transmission scheme.

For the SFN transmission scheme, the number of bits of the first SRI field is determined according to at least one of the first indication information field, the second maximum number of transmission layers, or the third maximum number of transmission layers. The second maximum number of transmission layers is the maximum number of transmission layers associated with the first SRS resource set and the second SRS resource set. The third maximum number of transmission layers is the maximum number of transmission layers associated with the single-TRP transmission scheme, the single-antenna panel transmission scheme or the TDM transmission scheme.

In the embodiment 3-2, the first indication information field indicates that the first SRI field is associated with the second SRS resource set, or that the second SRI field is associated with the first SRS resource set.

Example 3-2-1: determining the number of bits of the first SRI field according to at least one of the first indication information field, the second maximum number of transmission layers, or the third maximum number of transmission layers, may include:

    in the case where the network device does not indicate the transmission scheme, determining, by the terminal device, the number of bits of the first SRI field according to the number of SRS resources in the SRS resource set configured by the network device via higher layer signaling; and/or
    in the case where the network device indicates the transmission scheme, determining, by the terminal device, the number of bits of the first SRI field according to the number of SRS resources in the SRS resource set associated with uplink transmission under the transmission scheme indicated by the network device.

Example 3-2-2: determining the number of bits of the first SRI field according to at least one of the first indication information field, the second maximum number of transmission layers, or the third maximum number of transmission layers, may include:

    if the first indication information field is present, determining the number of bits of the first SRI field according to the number of SRS resources that are configured in the SRS resource set indicated by the first indication information field; or
    if the first indication information field is not present, determining the number of bits of the first SRI field according to the number of SRS resources that are configured in the SRS resource set configured by higher layer signaling.

Optionally, the example 3-2-1 and the example 3-2-2 may be applicable to the codebook-based uplink transmission. That is, the one or more uplink transmissions scheduled by the DCI may be codebook-based uplink transmissions.

Example 3-2-3: determining the number of bits of the first SRI field according to at least one of the first indication information field, the second maximum number of transmission layers, or the third maximum number of transmission layers, may include:

in a case where the network device indicates the first transmission scheme, determining, by the terminal device, the number of bits of the first SRI field according to the number of SRS resources in the SRS resource set associated with the uplink transmission under the first transmission scheme indicated by the network device and the maximum number of transmission layers associated with the first transmission scheme (i.e., the third maximum number of transmission layers); and/or

in a case where the network device indicates the second transmission scheme, determining, by the terminal device, the number of bits of the first SRI field according to the number of SRS resources in the SRS resource set associated with the first uplink transmission under the second transmission scheme indicated by the network device and the maximum number of transmission layers associated with the first uplink transmission under the second transmission scheme; and/or

in a case where the network device does not indicate the transmission scheme, determining, by the terminal device, the number of bits of the first SRI field according to the number of SRS resources in the SRS resource set configured by the network device via higher layer signaling and the maximum number of transmission layers associated with the first transmission scheme (i.e., the third maximum number of transmission layers).

Example 3-2-4: determining the number of bits of the first SRI field according to at least one of the first indication information field, the second maximum number of transmission layers, or the third maximum number of transmission layers, may include:

in the case where the first indication information field is present and the first indication information field indicates the first state or the second state, determining the number of bits of the first SRI field according to the number of SRS resources that are configured in the SRS resource set indicated by the first indication information field and the third maximum number of transmission layers; and/or

in the case where the first indication information field is present and the first indication information field indicates the third state or the fourth state, determining the number of bits of the first SRI field according to the number of SRS resources that are configured in the SRS resource set indicated by the first indication information field and the second maximum number of transmission layers; and/or

in the case where the first indication information field is not present, determining the number of bits of the first SRI field according to the number of SRS resources that are configured in the SRS resource set configured by the higher layer signaling and the third maximum number of transmission layers.

Optionally, the example 3-1-3 and the example 3-1-4 may be applicable to the non-codebook-based uplink transmission. That is, the one or more uplink transmissions scheduled by the DCI may be non-codebook-based uplink transmissions.

Example 3-2-5: the number of bits of the first SRI field is determined according to the larger value between the second maximum number of transmission layers and the third maximum number of transmission layers. A specific determination manner refers to the example 3-1-5 in the embodiment 3-1, which will not be repeated here for brevity.

Embodiment 4: a determination for the number of bits of the second SRI field.

Embodiment 4-1: the number of bits of the second SRI field is determined according to the second maximum number of transmission layers and/or the first indication information field.

The second maximum number of transmission layers is the maximum number of transmission layers associated with the second SRS resource set.

Optionally, the embodiment 4-1 may be applicable to the SDM transmission scheme. That is, the one or more uplink transmissions scheduled by the DCI may be uplink transmissions under the SDM transmission scheme.

In the embodiment 4-1, the first indication information field indicates that the first SRI field is associated with the first SRS resource set, and that the second SRI field is associated with the second SRS resource set.

Example 4-1-1: determining the number of bits of the second SRI field according to the second maximum number of transmission layers and/or the first indication information field, includes:

in the case where the single-TRP transmission scheme, the single-antenna panel transmission scheme or the TDM transmission scheme is employed, the number of bits of the second SRI field being 0, or the second SRI field being a reserved field; and/or

in the case where the SDM transmission scheme or the SFN transmission scheme is employed, determining the number of bits of the second SRI field according to the number of SRS resources that are configured in the SRS resource set indicated by the first indication information field.

Example 4-1-2: determining the number of bits of the second SRI field according to the second maximum number of transmission layers and/or the first indication information field, includes:

in the case where the first indication information field is not present, or the first indication information field is present and the first indication information field indicates the third state or the fourth state, determining the number of bits of the second SRI field according to the number of SRS resources that are configured in the SRS resource set indicated by the first indication information field; and/or

in the case where the first indication information field is not present, or the first indication information field is present and the first indication information field indicates the first state or the second state, the number of bits of the second SRI field is 0, or the second SRI field is a reserved field.

Optionally, the example 4-1-1 and the example 4-1-2 may be applicable to the codebook-based uplink transmission. That is, the one or more uplink transmissions scheduled by the DCI may be codebook-based uplink transmissions.

Example 4-1-3: determining the number of bits of the second SRI field according to the second maximum number of transmission layers and/or the first indication information field, includes:

in the case where the single-TRP transmission scheme, the single-antenna panel transmission scheme or the TDM transmission scheme is employed, the number of bits of the second SRI field being 0, or the second TPMI field being a reserved field; and/or

in the case the SDM transmission scheme or the SFN transmission scheme is employed, determining the number of bits of the second SRI field according to the number of SRS resources that are configured in the SRS resource set indicated by the first indication information field and the second maximum number of transmission layers.

Example 4-1-4: determining the number of bits of the second SRI field according to the second maximum number of transmission layers and/or the first indication information field, includes:

in the case where the first indication information field is not present, or the first indication information field is present and the first indication information field indicates the first state or the second state, the number of bits of the second SRI field is 0, or the second SRI field is a reserved field; and/or

in the case where the first indication information field is present and the first indication information field indicates the third state or the fourth state, determining the number of bits of the second SRI field according to the number of SRS resources that are configured in the SRS resource set indicated by the first indication information field and the second maximum number of transmission layers.

Optionally, the example 4-1-3 and the example 4-1-4 may be applicable to the non-codebook-based uplink transmission. That is, the one or more uplink transmissions scheduled by the DCI may be non-codebook-based uplink transmissions.

Embodiment 4-2: the number of bits of the second SRI field is determined according to the first maximum number of transmission layers and/or the first indication information field.

The first maximum number of transmission layers is the maximum number of transmission layers associated with the first SRS resource set.

Optionally, the embodiment 4-2 may be applicable to the SDM transmission scheme. That is, the one or more uplink transmissions scheduled by the DCI may be uplink transmissions under the SDM transmission scheme.

In the embodiment 4-2, the first indication information field indicates that the second SRI field is associated with the first SRS resource set, and that the first SRI field is associated with the second SRS resource set.

Example 4-2-1: determining the number of bits of the second SRI field according to the first maximum number of transmission layers and/or the first indication information field, includes:

in the case where the single-TRP transmission scheme, the single-antenna panel transmission scheme or the TDM transmission scheme is employed, the number of bits of the second SRI field being 0, or the second SRI field being a reserved field; and/or

in the case where the SDM transmission scheme or the SFN transmission scheme is employed, determining the number of bits of the second SRI field according to the number of SRS resources that are configured in the SRS resource set indicated by the first indication information field.

Example 4-2-2: determining the number of bits of the second SRI field according to the first maximum number of transmission layers and/or the first indication information field, includes:

in the case where the first indication information field is not present, or the first indication information field is present and the first indication information field indicates the third state or the fourth state, determining the number of bits of the second SRI field according to the number of SRS resources that are configured in the SRS resource set indicated by the first indication information field; and/or

in the case where the first indication information field is not present, or the first indication information field is present and the first indication information field indicates the first state or the second state, the number of bits of the second SRI field being 0, or the second SRI field being a reserved field.

Optionally, the example 4-2-1 and the example 4-2-2 may be applicable to the codebook-based uplink transmission. That is, the one or more uplink transmissions scheduled by the DCI may be codebook-based uplink transmissions.

Example 4-2-3: determining the number of bits of the second SRI field according to the first maximum number of transmission layers and/or the first indication information field, includes:

in the case where the single-TRP transmission scheme, the single-antenna panel transmission scheme or the TDM transmission scheme is employed, the number of bits of the second SRI field being 0, or the second TPMI field being a reserved field; and/or

in the case where the SDM transmission scheme or the SFN transmission scheme is employed, determining the number of bits of the second SRI field according to the number of SRS resources that are configured in the SRS resource set indicated by the first indication information field and the first maximum number of transmission layers.

Example 4-2-4: determining the number of bits of the second SRI field according to the first maximum number of transmission layers and/or the first indication information field, includes:

in the case where the first indication information field is not present, or the first indication information field is present and the first indication information field indicates the first state or the second state, the number of bits of the second SRI field being 0 or a reserved field; and/or

in the case where the first indication information field is present and the first indication information field indicates the third state or the fourth state, determining the number of bits of the second SRI field according to the number of SRS resources that are configured in the SRS resource set indicated by the first indication information field and the first maximum number of transmission layers.

Optionally, the example 4-2-3 and the example 4-2-4 may be applicable to the non-codebook-based uplink transmission. That is, the one or more uplink transmissions scheduled by the DCI may be non-codebook-based uplink transmissions.

Embodiment 4-3: the number of bits of the second SRI field is determined according to the first maximum number of transmission layers and/or the first indication information field.

The first maximum number of transmission layers is the maximum number of transmission layers associated with the first SRS resource set and the second SRS resource set.

Optionally, the embodiment 4-3 may be applicable to the SFN transmission scheme. That is, the one or more uplink transmissions scheduled by the DCI may be uplink transmissions under the SFN transmission scheme.

In the embodiment 4-3, the first indication information field indicates that the first SRI field is associated with the first SRS resource set and that the second SRI field is associated with the second SRS resource set. The maximum number of transmission layers associated with the first SRS resource set is the same as the maximum number of transmission layers associated with the second SRS resource set.

Example 4-3-1: determining the number of bits of the second SRI field according to the first maximum number of transmission layers and/or the first indication information field, includes:

in the case where the single-TRP transmission scheme, the single-antenna panel transmission scheme or the TDM transmission scheme is employed, the number of bits of the second SRI field being 0, or the second SRI field being a reserved field; and/or

in the case where the SDM transmission scheme or the SFN transmission scheme is employed, determining the number of bits of the second SRI field according to the number of SRS resources that are configured in the SRS resource set indicated by the first indication information field.

Example 4-3-2: determining the number of bits of the second SRI field according to the first maximum number of transmission layers and/or the first indication information field, includes:

in the case where the first indication information field is not present, or the first indication information field is present and the first indication information field indicates the third state or the fourth state, determining the number of bits of the second SRI field according to the number of SRS resources that are configured in the SRS resource set indicated by the first indication information field; and/or

in the case where the first indication information field is not present, or the first indication information field is present and the first indication information field indicates the first state or the second state, the number of bits of the second SRI field being 0, or the second SRI field being a reserved field.

Optionally, the example 4-3-1 and the example 4-3-2 may be applicable to the codebook-based uplink transmission. That is, the one or more uplink transmissions scheduled by the DCI may be codebook-based uplink transmissions.

Example 4-3-3: determining the number of bits of the second SRI field according to the first maximum number of transmission layers and/or the first indication information field, includes:

in the case where the single-TRP transmission scheme, the single-antenna panel transmission scheme or the TDM transmission scheme is employed, the number of bits of the second SRI field being 0, or the second TPMI field being a reserved field; and/or

in the case where the SDM transmission scheme or the SFN transmission scheme is employed, determining the number of bits of the second SRI field according to the number of SRS resources that are configured in the SRS resource set indicated by the first indication information field and the first maximum number of transmission layers.

Example 4-3-4: determining the number of bits of the second SRI field according to the first maximum number of transmission layers and/or the first indication information field, includes:

in the case where the first indication information field is not present, or the first indication information field is present and the first indication information field indicates the first state or the second state, the number of bits of the second SRI field being 0 or a reserved field; and/or

in the case where the first indication information field is present and the first indication information field indicates the third state or the fourth state, determining the number of bits of the second SRI field according to the number of SRS resources that are configured in the SRS resource set indicated by the first indication information field and the first maximum number of transmission layers.

Optionally, the example 4-3-3 and the example 4-3-4 may be applicable to the non-codebook-based uplink transmission. That is, the one or more uplink transmissions scheduled by the DCI may be non-codebook-based uplink transmissions.

Embodiment 4-4: the number of bits of the second SRI field is determined according to the second maximum number of transmission layers and/or the first indication information field.

The second maximum number of transmission layers is the maximum number of transmission layers associated with the first SRS resource set and the second SRS resource set.

Optionally, the embodiment 4-4 may be applicable to the SFN transmission scheme. That is, the one or more uplink transmissions scheduled by the DCI may be uplink transmissions under the SFN transmission scheme.

In the embodiment 4-4, the first indication information field indicates that the first SRI field is associated with the second SRS resource set and that the second SRI field is associated with the first SRS resource set. The maximum number of transmission layers associated with the first SRS resource set is the same as the maximum number of transmission layers associated with the second SRS resource set.

Example 4-4-1: determining the number of bits of the second SRI field according to the second maximum number of transmission layers and/or the first indication information field, includes:

in the case where the single-TRP transmission scheme, the single-antenna panel transmission scheme or the TDM transmission scheme is employed, the number of bits in the second SRI field being 0, or the second SRI field being a reserved field; and/or

in the case where the SDM transmission scheme or the SFN transmission scheme is employed, determining the number of bits of the second SRI field according to the number of SRS resources that are configured in the SRS resource set indicated by the first indication information field.

Example 4-4-2: determining the number of bits of the second SRI field according to the second maximum number of transmission layers and/or the first indication information field, includes:

in the case where the first indication information field is not present, or the first indication information field is present and the first indication information field indicates the third state or the fourth state, determining the number of bits of the second SRI field according to the number of SRS resources that are configured in the SRS resource set indicated by the first indication information field; and/or

in the case where the first indication information field is not present, or the first indication information field is present and the first indication information field indicates the first state or the second state, the number of bits of the second SRI field being 0, or the second SRI field being a reserved field.

Optionally, the example 4-4-1 and the example 4-4-2 may be applicable to the codebook-based uplink transmission. That is, the one or more uplink transmissions scheduled by the DCI may be codebook-based uplink transmissions.

Example 4-4-3: determining the number of bits of the second SRI field according to the second maximum number of transmission layers and/or the first indication information field, includes:

in the case where the single-TRP transmission scheme, the single-antenna panel transmission scheme or the TDM transmission scheme is employed, the number of bits of the second SRI field being 0, or the second TPMI field being a reserved field; and/or

in the case where the SDM transmission scheme or the SFN transmission scheme is employed, determining the number of bits of the second SRI field according to the number of SRS resources that are configured in the SRS resource set indicated by the first indication information field and the second maximum number of transmission layers.

Example 4-4-4: determining the number of bits of the second SRI field according to the second maximum number of transmission layers and/or the first indication information field, includes:

in the case where the first indication information field is not present, or the first indication information field is present and the first indication information field indicates the first state or the second state, the number of bits of the second SRI field being 0 or a reserved field; and/or

in the case where the first indication information field is present and the first indication information field indicates the third state or the fourth state, determining the number of bits of the second SRI field according to the number of SRS resources that are configured in the SRS resource set indicated by the first indication information field and the second maximum number of transmission layers.

Optionally, the example 4-4-3 and the example 4-4-4 may be applicable to the non-codebook-based uplink transmission. That is, the one or more uplink transmissions scheduled by the DCI may be non-codebook-based uplink transmissions.

In summary, the embodiments of the present disclosure provide the solution for determining the number of bits of the SRI field in the case where the first maximum number of transmission layers or the second maximum number of transmission layers is configured. Furthermore, the determination for the number of bits of the first SRI takes account of both the maximum number of transmission layers associated with the second transmission scheme and the third maximum number of transmission layers associated with the first transmission scheme. The first transmission scheme and the second transmission scheme are switched dynamically. Only the first SRI field is required for the uplink transmission under the first transmission scheme, thereby ensuring the consistency in terms of the number of bits of the first SRI field under the two transmission schemes. The complexity of the terminal device performing the blind detection on DCI is reduced. In addition, the compatibility with existing protocols is ensured.

Embodiment 5: a determination for the number of bits of the PTRS-DMRS association field.

Embodiment 5-1: the number of bits of the first PTRS-DMRS association field is determined according to at least one of the first maximum number of transmission layers, the second maximum number of transmission layers, or the third maximum number of transmission layers; and

the number of bits of the second PTRS-DMRS association field is determined according to at least one of the first maximum number of transmission layers, the second maximum number of transmission layers, the third maximum number of transmission layers, or the transmission scheme used for the one or more uplink transmissions.

The first maximum number of transmission layers is the maximum number of transmission layers associated with the first SRS resource set. The second maximum number of transmission layers is the maximum number of transmission layers associated with the second SRS resource set. The third maximum number of transmission layers is the maximum number of transmission layers associated with the single-TRP transmission scheme, the single-antenna panel transmission scheme or the TDM transmission scheme.

The embodiment 5-1 may be applicable to the SDM transmission scheme.

In some embodiments, in a case where the first maximum number of transmission layers, the second maximum number of transmission layers and the third maximum number of transmission layers are all 1, the number of bits of the first PTRS-DMRS association field is 0 bit.

In some embodiments, in the case where the first indication information field is present and a first condition is met, the number of bits of the first PTRS-DMRS association field is 2 bits. The first condition includes at least one of:

the third maximum number of transmission layers being greater than or equal to 2;
the first maximum number of transmission layers being greater than or equal to 2; or
the second maximum number of transmission layers being greater than or equal to 2.

In some embodiments, in the case where the first indication information field is present, the first indication information field indicates the third state or the fourth state, and one of the first maximum number of transmission layers and the second maximum number of transmission layers is equal to 1 and another is equal to 2, a bit in the first PTRS-DMRS association field, associated with an SRS resource set that is associated with a maximum transmission layer number equal to 1 of the first maximum number of transmission layers and the second maximum number of transmission layers, is a reserved bit. Alternatively, a PTRS port in the first PTRS-DMRS association field, corresponding to the SRS resource set associated with the maximum transmission layer number equal to 1 of the first maximum number of transmission layers and the second maximum number of transmission layers, is associated with a default DMRS port (for example, a DMRS port scheduled in the first place). Optionally, in the embodiment, the third maximum number of transmission layers is greater than 2.

For example, the first PTRS-DMRS association field includes 2 bits, and each bit is associated with one SRS resource set. For example, the MSB is associated with the first SRS resource set, and the LSB is associated with the second SRS resource set. Therefore, in a case where the first maximum number of transmission layers is 1 and the second maximum number of transmission layers is 2, the bit (i.e., MSB) in the first PTRS-DMRS association field associated with the first SRS resource set is a reserved bit, or the PTRS port corresponding to the first SRS resource set is associated with the first DMRS port scheduled, as shown in Table 4. Alternatively, in a case where the first maximum number of transmission layers is 2 and the second maximum number of transmission layers is 1, the bit (i.e., LSB) in the first PTRS-DMRS association field associated with the second SRS resource set is a reserved bit, or the PTRS port corresponding to the second SRS resource set is associated with the first DMRS port scheduled, as shown in Table 5.

Table 4

| MSB state | DMRS port | LSB state | DMRS port |
|-----------|-----------|-----------|-----------|
| 0 | Reserved | 0 | First DMRS port corresponding to the second SRI field and/or the second TPMI field |
| 1 | Reserved | 1 | Second DMRS port corresponding to the second SRI field and/or the second TPMI field |

Table 5

| MSB state | DMRS port | LSB state | DMRS port |
|-----------|-----------|-----------|-----------|
| 0 | First DMRS port corresponding to the second SRI field and/or the second TPMI field | 0 | Reserved |
| 1 | Second DMRS port corresponding to the second SRI field and/or the second TPMI field | 1 | Reserved |

In some embodiments, in the case where the first indication information field is not present, the second PTRS-DMRS association field is 0 bit.

In some embodiments, in the case where the one or more uplink transmissions are employed under the SDM transmission scheme, the second PTRS-DMRS association field is 0 bit.

In some embodiments, in the case where the first indication information field is present and the first maximum number of transmission layers or the second maximum number of transmission layers is smaller than or equal to 2, the second PTRS-DMRS association field is 0 bit.

In some embodiments, in the case where the first indication information field is present and the first maximum number of transmission layers or the second maximum number of transmission layers is greater than 2, the second PTRS-DMRS association field is 2 bits.

Example 5-2: the number of bits of the first PTRS-DMRS association field is determined according to the first maximum number of transmission layers and/or the third maximum number of transmission layers. The number of bits of the second PTRS-DMRS association field is determined according to at least one of the first maximum number of transmission layers, the third maximum number of transmission layers, or the first indication information field. The first maximum number of transmission layers is the maximum number of transmission layers associated with the first SRS resource set and the second SRS resource set. The third maximum number of transmission layers is the maximum number of transmission layers associated with the single-TRP transmission scheme, the single-antenna panel transmission scheme, or the TDM transmission scheme.

The embodiment 5-2 may be applicable to the SFN transmission scheme.

In some embodiments, in the case where both the first maximum number of transmission layers and the third maximum number of transmission layers are 1, the number of bits of the first PTRS-DMRS association field is 0 bit.

In some embodiments, in the case where the first indication information field is present and a second condition is met, the number of bits of the first PTRS-DMRS association field is 2 bits. The second condition includes the third maximum number of transmission layers being greater than or equal to 2, and/or, the first maximum number of transmission layers being greater than or equal to 2.

In some embodiments, in the case where the first indication information field is present, the first indication information field indicates the third state or the fourth state, and the first maximum number of transmission layers is equal to 1, the first PTRS-DMRS association field is a reserved field. Optionally, in the embodiment, the third maximum number of transmission layers is greater than 2.

For example, in a case where the first PTRS-DMRS is 2 bits, the MSB corresponds to the first SRS resource set, the LSB corresponds to the second SRS resource set. If the maximum number of transmission layers associated with the first SRS resource set and the second SRS resource set is 1, the MSB is a reserved bit and the LSB is a reserved bit, as shown in Table 6.

Table 6

| MSB state | DMRS port | LSB state | DMRS port |
|-----------|-----------|-----------|-----------|
| 0 | Reserved | 0 | Reserved |
| 1 | Reserved | 1 | Reserved |

In some embodiments, if the first indication information field is not present, the second PTRS-DMRS association field is 0 bit.

In some embodiments, if the one or more uplink transmissions is employed under the SFN transmission scheme, the second PTRS-DMRS association field is 0 bit.

In some embodiments, if the first indication information field is present and the first maximum number of transmission layers is smaller than or equal to 2, the second PTRS-DMRS association field is 0 bit.

In some embodiments, if the first indication information field is present and the first maximum number of transmission layers is greater than 2, the second PTRS-DMRS association field is 2 bits.

Therefore, for the SDM transmission scheme in some embodiments of the present disclosure, the terminal device can determine the number of bits of the first TPMI field according to the manner described in the embodiment 1. The terminal device may determine the number of bits of the second TPMI field according to the manner described in the embodiment 2-1 or the embodiment 2-2. The terminal device may determine the number of bits of the first SRI field according to the manner described in the embodiment 3. The terminal device may determine the number of bits of the second SRI field according to the manner described in the embodiment 4-1 or the embodiment 4-2. The terminal device may determine the number of bits of the first PTRS-DMRS association field and the number of bits of the second PTRS-DMRS association field according to the manner described in the embodiment 5-1.

Therefore, for the SFN transmission scheme, the terminal device can determine the number of bits of the first TPMI field according to the manner described in the embodiment 1. The terminal device may determine the number of bits of the second TPMI field according to the manner described in the embodiment 2-3 or the embodiment 2-4. The terminal device may determine the number of bits of the first SRI field according to the manner described in the embodiment 3. The terminal device may determine the number of bits of the second SRI field according to the manner described in the embodiment 4-3 or the embodiment 4-4. The terminal device may determine the number of bits of the first PTRS-DMRS association field and the number of bits of the second PTRS-DMRS association field according to the manner described in the embodiment 5-2.

In some embodiments, the DCI may be DCI format 0-1 or DCI format 0-2.

That is, the above embodiments are applicable to the determination for the number of bits of the first information field and/or the number of bits of the second information field in the DCI format 0-1 or the DCI format 0-2.

In some embodiments, the DCI under the first transmission scheme is denoted as first DCI, and the DCI under the second transmission scheme is denoted as second DCI. If a total number of bits of the first DCI is not equal to a total number of bits of the second DCI, DCI with a smaller number of bits may be padded (e.g., padded with zeros) so that the number of bits of the padded DCI is equal to the number of bits of the larger one. It shall be understood that the number of bits of DCI may also be replaced by a number of bits of DCI information.

In other words, the network device may pad the DCI with a smaller number of bits, so that the total number of bits of the DCI under the first transmission scheme is aligned with the total number of bits of the DCI under the second transmission scheme. In this way, the total number of bits of the DCI under the first transmission scheme is the same as the total number of bits of the DCI under the second transmission scheme, which is beneficial to reducing the complexity of the terminal device performing the blind detection on the DCI. For example, if the number of bits of the first DCI is smaller than the number of bits of the second DCI, zero padding is performed after valid bits of the first DCI. That is, zero padding starts from a high order bit. Furthermore, zero padding may also be performed from a low order bit, which is not limited in the embodiments of the present disclosure.

In summary, in the embodiments of the present disclosure, the network device may configure a respective maximum number of transmission layers for different SRS resource sets, and provide the method for determining the numbers of bits of the TPMI field, the SRI field and the PTRS-DMRS association field in a case where the SRS resource sets are associated with their respective maximum numbers of transmission layers. Furthermore, considering the dynamic switching between the multi-panel simultaneous transmission scheme (corresponding to the second transmission scheme) and the single-panel/single-TRP transmission scheme (corresponding to the first transmission scheme), the method for determining the numbers of bits of the TPMI field, SRI field, and PTRS-DMRS association field that is compatible with the two transmission schemes is provided, which is beneficial to reducing the difficulty of the terminal device performing the blind detection and may be better compatible with the existing technology.

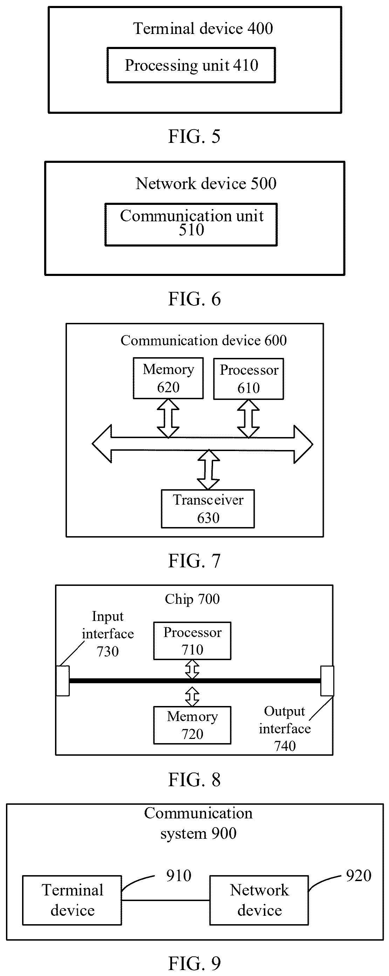

The method embodiments of the present disclosure are described in detail above with reference to FIGS. 2 to 4. The device embodiments of the present disclosure will be described in detail with reference to FIGS. 5 to 9 hereafter. It shall be understood that the device embodiments and the method embodiments correspond to each other, and similar descriptions may refer to the method embodiments.

FIG. 5 shows a schematic block diagram of a terminal device 400 according to embodiments of the present disclosure. As shown in FIG. 5 , the terminal device 400 includes:

a processing unit 410, configured to determine a number of bits of a first information field in downlink control information (DCI) and/or a number of bits of a second information field in the DCI according to first information. The DCI is used to schedule one or more uplink transmissions, and the first information field and/or the second information field are used to determine a transmission parameter of the one or more uplink transmissions.

The first information includes at least one of:

a maximum number of transmission layers associated with a first sounding reference signal (SRS) resource set;
a maximum number of transmission layers associated with a second SRS resource set;
a maximum number of transmission layers associated with a single-transmission reception point (TRP) transmission scheme, a single-antenna panel transmission scheme or a time division multiplexing (TDM) transmission scheme; or
a first indication information field, used to indicate dynamic switching between a first transmission scheme and a second transmission scheme and/or an SRS resource set associated with an uplink transmission under the first transmission scheme, where the uplink transmission under the first transmission scheme includes one uplink transmission, and uplink transmissions under the second transmission scheme include a plurality of uplink transmissions.

In some embodiments, the first information field includes at least one of a first precoding information and number of layers indicator (TPMI) field, a first SRS resource indicator (SRI) field, or a first phase tracking reference signal and demodulation reference signal (PTRS-DMRS) association field.

The second information field includes at least one of a second TPMI field, a second SRI field, or a second PTRS-DMRS association field.

In some embodiments, a number of bits of the first TPMI field is determined according to a first maximum number of transmission layers and/or a third maximum number of transmission layers. The first maximum number of transmission layers is the maximum number of transmission layers associated with the first SRS resource set, or the first maximum number of transmission layers is a maximum number of transmission layers associated with the first SRS resource set and the second SRS resource set. The third maximum number of transmission layers is the maximum number of transmission layers associated with the single-TRP transmission scheme, the single-antenna panel transmission scheme or the TDM transmission scheme.

In some embodiments, in a case where the first indication information field is not present, or the first indication information field is present and the first indication information field indicates a first state or a second state, the number of bits of the first TPMI field is determined according to the third maximum number of transmission layers; or

in a case where the first indication information field is present, and the first indication information field indicates a third state or a fourth state, the number of bits of the first TPMI field is determined according to the first maximum number of transmission layers.

In some embodiments, the number of bits of the first TPMI field is determined according to a larger value between the first maximum number of transmission layers and the third maximum number of transmission layers.

In some embodiments, in a case where the first indication information field is present, and the first indication information field indicates a first state or a second state, the first TPMI field includes N1 bits, and a state corresponding to the N1 bits is used to indicate precoding information and number of transmission layers information, N1 being a positive integer; or

in a case where the first indication information field is present and the first indication information field indicates a third state or a fourth state, the first TPMI field includes N2 bits and N3 bits. A state corresponding to the N2 bits is used to indicate the precoding information and the number of transmission layers information, and a state corresponding to the N3 bits is a reserved state, N2 and N3 being positive integers.

N1=N2+N3, N1 is determined according to the larger value between the first maximum number of transmission layers and the third maximum number of transmission layers, and N2 is determined according to a smaller value between the first maximum number of transmission layers and the third maximum number of transmission layers.

In some embodiments, the third maximum number of transmission layers is greater than the first maximum number of transmission layers.

In some embodiments, in a case where the first indication information field is present and the first indication information field indicates a first state or a second state, the first TPMI field includes N4 bits and N5 bits, where a state corresponding to the N4 bits is used to indicate precoding information and number of transmission layers information, and a state corresponding to the N5 bits is a reserved state; or

in a case where the first indication information field is present and the first indication information field indicates a third state or a fourth state, the first TPMI field includes N6 bits, and a state corresponding to the N6 bits is used to indicate the precoding information and the number of transmission layers information.

N6=N4+N5, N6 is determined according to the larger value between the first maximum number of transmission layers and the third maximum number of transmission layers, and N4 is determined according to a smaller value between the first maximum number of transmission layers and the third maximum number of transmission layers.

In some embodiments, the third maximum number of transmission layers is smaller than the first maximum number of transmission layers.

In some embodiments, in a case where the third maximum number of transmission layers is equal to the first maximum number of transmission layers, and the first indication information field is present and the first indication information field indicates a first state, a second state, a third state or a fourth state, the first TPMI field includes N7 bits. A state corresponding to the N7 bits is used to indicate the precoding information and the number of transmission layers information, and N7 is determined according to the first maximum number of transmission layers or the third maximum number of transmission layers.

In some embodiments, the one or more uplink transmissions include an uplink transmission under the single-TRP transmission scheme, an uplink transmission under the single-antenna panel transmission scheme, an uplink transmission under the TDM transmission scheme, uplink transmissions under a spatial division multiplexing (SDM) transmission scheme, or uplink transmissions under a single frequency network (SFN) transmission scheme.

In some embodiments, the number of bits of the second TMPI field is determined according to a second maximum number of transmission layers and/or the first indication information field, and the second maximum number of transmission layers is the maximum number of transmission layers associated with the second SRS resource set.

In some embodiments, in a case where the first indication information field is not present, or the first indication information field is present and the first indication information field indicates a first state or a second state, the number of bits of the second TPMI field is 0, or the second TPMI field is a reserved field; or

in a case where the first indication information field is present and the first indication information field indicates a third state or a fourth state, the number of bits of the second TPMI field is determined according to the second maximum number of transmission layers.

In some embodiments, the one or more uplink transmissions include uplink transmissions under the SDM transmission scheme.

In some embodiments, the number of bits of the second TMPI field is determined according to the first maximum number of transmission layers and/or the first indication information field.

The first maximum number of transmission layers is a maximum number of transmission layers associated with the first SRS resource set and the second SRS resource set.

In some embodiments, in a case where the first indication information field is not present, or the first indication information field is present and the first indication information field indicates the first state or the second state, the number of bits of the second TPMI field is 0, or the second TPMI field is a reserved field. Alternatively, in a case where the first indication information field is present and the first indication information field indicates the third state or the fourth state, the number of bits of the second TPMI field is determined according to the first maximum number of transmission layers.

In some embodiments, the one or more uplink transmissions are uplink transmissions under the SFN transmission scheme.

In some embodiments, the number of bits of the first SRI field is determined according to at least one of the first indication information field, the first maximum number of transmission layers, or the third maximum number of transmission layers. The first maximum number of transmission layers is the maximum number of transmission layers associated with the first SRS resource set, or the first maximum number of transmission layers is the maximum number of transmission layers associated with the first SRS resource set and the second SRS resource set; and the third maximum number of transmission layers is the maximum number of transmission layers associated with the single-TRP transmission scheme, the single-antenna panel transmission scheme or the TDM transmission scheme.

In some embodiments, in a case where the first indication information field is present, the number of bits of the first SRI field is determined according to a number of SRS resources that are configured in an SRS resource set indicated by the first indication information field; or

in a case where the first indication information field is not present, the number of bits of the first SRI field is determined according to a number of SRS resources that are configured in an SRS resource set configured by higher layer signaling.

In some embodiments, the one or more uplink transmissions are codebook-based uplink transmissions.

In some embodiments, in a case where the first indication information field is present and the first indication information field indicates the first state or the second state, the number of bits of the first SRI field is determined according to the number of SRS resources that are configured in the SRS resource set indicated by the first indication information field and the third maximum number of transmission layers;

in a case where the first indication information field is present and the first indication information field indicates the third state or the fourth state, the number of bits of the first SRI field is determined according to the number of SRS resources that are configured in the SRS resource set indicated by the first indication information field and the first maximum number of transmission layers; or

in a case where the first indication information field is not present, the number of bits of the first SRI field is determined according to the number of SRS resources that are configured in the SRS resource set configured by higher layer signaling and the third maximum number of transmission layers.

In some embodiments, the one or more uplink transmissions are non-codebook-based uplink transmissions.

In some embodiments, the number of bits of the first SRI field is determined according to the larger value between the first maximum number of transmission layers and the third maximum number of transmission layers.

In some embodiments, in a case where the first indication information field is present and the first indication information field indicates the first state or the second state, the first SRI field includes M1 bits, and a state corresponding to the M1 bits is used to indicate one or more SRS resources, M1 being a positive integer; or

in a case where the first indication information field is present and the first indication information field indicates the third state or the fourth state, the first SRI field includes M2 bits and M3 bits, where a state corresponding to the M2 bits is used to indicate one or more SRS resources, and a state corresponding to the M3 bits is a reserved state, M2 and M3 being positive integers.

M1=M2+M3, M1 is determined according to the larger value between the first maximum number of transmission layers and the third maximum number of transmission layers, and M2 is determined according to the smaller value between the first maximum number of transmission layers and the third maximum number of transmission layers.

In some embodiments, the third maximum number of transmission layers is greater than the first maximum number of transmission layers.

In some embodiments, in a case where the first indication information field is present and the first indication information field indicates the first state or the second state, the first SRI field includes M4 bits and M5 bits, where a state corresponding to the M4 bits is used to indicate one or more SRS resources, and a state corresponding to the M5 bits is a reserved state; or

in a case where the first indication information field is present and the first indication information field indicates the third state or the fourth state, the first SRI field includes M6 bits, and a state corresponding to the M6 bits is used to indicate one or more SRS resources.

M6=M4+M5, M6 is determined according to the larger value between the first maximum number of transmission layers and the third maximum number of transmission layers, and M4 is determined according to the smaller value between the first maximum number of transmission layers and the third maximum number of transmission layers.

In some embodiments, the third maximum number of transmission layers is smaller than the first maximum number of transmission layers.

In some embodiments, in a case where the third maximum number of transmission layers is equal to the first maximum number of transmission layers, and the first indication information field is present and the first indication information field indicates the first state, the second state, the third state or the fourth state, the first SRI field includes M7 bits. A state corresponding to the M7 bits is used to indicate one or more SRS resources, and M7 is determined according to the first maximum number of transmission layers or the third maximum number of transmission layers.

In some embodiments, the one or more uplink transmissions include an uplink transmission under the single-TRP transmission scheme, an uplink transmission under the single-antenna panel transmission scheme, an uplink transmission under the TDM transmission scheme, uplink transmissions under the SDM transmission scheme, or uplink transmissions under the SFN transmission scheme.

In some embodiments, the number of bits of the second SRI field is determined according to the second maximum number of transmission layers and/or the first indication information field, and the second maximum number of transmission layers is the maximum number of transmission layers associated with the second SRS resource set.

In some embodiments, in a case where the first indication information field is not present, or the first indication information field is present and the first indication information field indicates the third state or the fourth state, the number of bits of the second SRI field is determined according to the number of SRS resources that are configured in the SRS resource set indicated by the first indication information field; or
in a case where the first indication information field is not present, or the first indication information field is present and the first indication information field indicates the first state or the second state, the number of bits of the second SRI field is 0.

In some embodiments, the one or more uplink transmissions are codebook-based uplink transmissions.

In some embodiments, in a case where the first indication information field is not present, or the first indication information field is present and the first indication information field indicates the first state or the second state, the number of bits of the second SRI field is 0 or a reserved field; or
in a case where the first indication information field is present and the first indication information field indicates the third state or the fourth state, the number of bits of the second SRI field is determined according to the number of SRS resources that are configured in the SRS resource set indicated by the first indication information field and the second maximum number of transmission layers.

In some embodiments, the one or more uplink transmissions are non-codebook-based uplink transmissions.

In some embodiments, the second SRI field is determined according to the first maximum number of transmission layers and/or the first indication information field, and the first maximum number of transmission layers is the maximum number of transmission layers associated with the first SRS resource set and the second SRS resource set.

In some embodiments, in a case where the first indication information field is not present, or the first indication information field is present and the first indication information field indicates the third state or the fourth state, the number of bits of the second SRI field is determined according to the number of SRS resources that are configured in the SRS resource set indicated by the first indication information field; or
in a case where the first indication information field is not present, or the first indication information field is present and the first indication information field indicates the first state or the second state, the number of bits of the second SRI field is 0.

In some embodiments, the one or more uplink transmissions are codebook-based uplink transmissions.

In some embodiments, in a case where the first indication information field is not present, or the first indication information field is present and the first indication information field indicates the first state or the second state, the number of bits of the second SRI field is 0 or a reserved field; or
in a case where the first indication information field is present and the first indication information field indicates the third state or the fourth state, the number of bits of the second SRI field is determined according to the number of SRS resources that are configured in the SRS resource set indicated by the first indication information field and the first maximum number of transmission layers.

In some embodiments, the one or more uplink transmissions are non-codebook-based uplink transmissions.

In some embodiments, the number of bits of the first PTRS-DMRS association field is determined according to at least one of the first maximum number of transmission layers, the second maximum number of transmission layers, or the third maximum number of transmission layers.

The number of bits of the second PTRS-DMRS association field is determined according to the first maximum number of transmission layers, the second maximum number of transmission layers, the third maximum number of transmission layers and the first indication information field.

The first maximum number of transmission layers is the maximum number of transmission layers associated with the first SRS resource set, the second maximum number of transmission layers is the maximum number of transmission layers associated with the second SRS resource set, and the third maximum number of transmission layers is the maximum number of transmission layers associated with the single-TRP transmission scheme, the single antenna panel transmission scheme or the TDM transmission scheme.

In some embodiments, in a case where the first maximum number of transmission layers, the second maximum number of transmission layers and the third maximum number of transmission layers are all 1, the number of bits of the first PTRS-DMRS association field is 0 bit.

In some embodiments, in a case where the first indication information field is present and a first condition is met, the number of bits of the first PTRS-DMRS association field is 2 bits, and the first condition includes at least one of: the third maximum number of transmission layers being greater than or equal to 2, the first maximum number of transmission layers being greater than or equal to 2, or the second maximum number of transmission layers being greater than or equal to 2.

In some embodiments, in a case where the first indication information field is present, the first indication information field indicates the third state or the fourth state, and one of the first maximum number of transmission layers and the second maximum number of transmission layers is equal to 1 and another of the first maximum number of transmission layers and the second maximum number of transmission layers is equal to 2, a bit in the first PTRS-DMRS association field, associated with an SRS resource set that is associated with a maximum number of transmission layers equal to 1 of the first maximum number of transmission layers and the second maximum number of transmission layers, is a reserved bit.

In some embodiments, in a case where the first indication information field is not present, the second PTRS-DMRS association field is 0 bit;

in a case where an SDM transmission scheme is employed for the one or more uplink transmissions, the second PTRS-DMRS association field is 0 bit;
in a case where the first indication information field is present and the first maximum number of transmission layers or the second maximum number of transmission layers is smaller than or equal to 2, the second PTRS-DMRS association field is 0 bit; or
in a case where the first indication information field is present and the first maximum number of transmission layers or the second maximum number of transmission layers is greater than 2, the second PTRS-DMRS association field is 2 bits.

In some embodiments, the one or more uplink transmissions are uplink transmissions under the SDM transmission scheme.

In some embodiments, the number of bits of the first PTRS-DMRS association field is determined according to the first maximum number of transmission layers and/or the third maximum number of transmission layers.

The number of bits of the second PTRS-DMRS association field is determined according to at least one of the first maximum number of transmission layers, the third maximum number of transmission layers, or the first indication information field.

The first maximum number of transmission layers is the maximum number of transmission layers associated with the first SRS resource set and the second SRS resource set, and the third maximum number of transmission layers is the maximum number of transmission layers associated with the single-TRP transmission scheme, the single-antenna panel transmission scheme or the TDM transmission scheme.

In some embodiments, in a case where both the first maximum number of transmission layers and the third maximum number of transmission layers are 1, the number of bits of the first PTRS-DMRS association field is 0 bit.

In some embodiments, in a case where the first indication information field is present and a second condition is met, the number of bits of the first PTRS-DMRS association field is 2 bits, and the second condition includes: the third maximum number of transmission layers being greater than or equal to 2, and/or the first maximum number of transmission layers being greater than or equal to 2.

In some embodiments, in a case where the first indication information field is present, the first indication information field indicates the third state or the fourth state, and the first maximum number of transmission layers is equal to 1, the first PTRS-DMRS association field is a reserved field.

In some embodiments, in a case where the first indication information field is not present, the second PTRS-DMRS association field is 0 bit;

in a case where the SFN transmission scheme is employed for the one or more uplink transmissions, the second PTRS-DMRS association field is 0 bit;
in a case where the first indication information field is present and the first maximum number of transmission layers is smaller than or equal to 2, the second PTRS-DMRS association field is 0 bit; or
in a case where the first indication information field is present and the first maximum number of transmission layers is greater than 2, the second PTRS-DMRS association field is 2 bits.

In some embodiments, the one or more uplink transmissions are uplink transmissions under the SFN transmission scheme.

In some embodiments, the first indication information field is used to indicate at least one of:

a first state, used to indicate the single-TRP transmission scheme or the single-antenna panel transmission scheme, that the first TPMI field and the first SRI field are associated with the first SRS resource set, and that the second information field is a reserved field;

a second state, used to indicate the single-TRP transmission scheme or the single-antenna panel transmission scheme, that the first TPMI field and the first SRI field are associated with the second SRS resource set, and that the second information field is a reserved field;

a third state, used to indicate the SDM transmission scheme or the SFN transmission scheme, that the first TPMI field and the first SRI field are associated with the first SRS resource set, and that the second TPMI field and the second SRI field are associated with the second SRS resource set; or

a fourth state, used to indicate the SDM transmission scheme or the SFN transmission scheme, that the first TPMI field and the first SRI field are associated with the second SRS resource set, and that the second TPMI field and the second SRI field are associated with the first SRS resource set.

In some embodiments, the first indication information field is used to indicate at least one of:

the first state, used to indicate the single-TRP transmission scheme or the single-antenna panel transmission scheme, that the first TPMI field and the first SRI field are associated with the first SRS resource set, and that the second information field is a reserved field;

the second state, used to indicate the single-TRP transmission scheme or the single-antenna panel transmission scheme, that the first TPMI field and the first SRI field are associated with the second SRS resource set, and that the second information field is a reserved field;

the third state, used to indicate the SDM transmission scheme or the SFN transmission scheme, that the first TPMI field and the first SRI field are associated with the first SRS resource set, and that the second TPMI field and the second SRI field are associated with the second SRS resource set; or

a fourth state, the fourth state being a reserved state.

Optionally, in some embodiments, a communication unit above may be a communication interface, a transceiver, or an input/output interface of a communication chip or a system on chip. A processing unit above may be one or more processors.

It shall be understood that the terminal device 400 based on the embodiments of the present disclosure may correspond to the terminal device in the method embodiments of the present disclosure. The above and other operations and/or functions of various units in the terminal device 400 are used for realizing corresponding processes of the terminal device in the method 200 shown in FIGS. 2 to 4, which will not be repeated here for brevity.

FIG. 5 is a schematic block diagram of a network device according to embodiments of the present disclosure. The network device 500 of FIG. 5 includes:

a communication unit 510, configured to transmit downlink control information (DCI) to a terminal device. A number of bits of a first information field in the DCI and/or a number of bits of a second information field in the DCI are determined according to first information, the DCI is used to schedule one or more uplink transmissions, and the first information field and/or the second information field are used to determine a transmission parameter of the one or more uplink transmissions.

The first information includes at least one of:

a maximum number of transmission layers associated with a first sounding reference signal (SRS) resource set;

a maximum number of transmission layers associated with a second SRS resource set;

a maximum number of transmission layers associated with a single-transmission reception point (TRP) transmission scheme. a single-antenna panel transmission scheme or a time division multiplexing (TDM) transmission scheme; or

a first indication information field, used to indicate dynamic switching between a first transmission scheme and a second transmission scheme and/or an SRS resource set associated with an uplink transmission under the first transmission scheme, where the uplink transmission under the first transmission scheme includes one uplink transmission, and uplink transmissions under the second transmission scheme include a plurality of uplink transmissions.

In some embodiments, the first information field includes at least one of a first precoding information and number of layers indicator (TPMI) field, a first SRS resource indicator (SRI) field, or a first phase tracking reference signal and demodulation reference signal (PTRS-DMRS) association field.

The second information field includes at least one of a second TPMI field, a second SRI field, or a second PTRS-DMRS association field.

In some embodiments, a number of bits of the first TPMI field is determined according to a first maximum number of transmission layers and/or a third maximum number of transmission layers. The first maximum number of transmission layers is the maximum number of transmission layers associated with the first SRS resource set, or the first maximum number of transmission layers is a maximum number of transmission layers associated with the first SRS resource set and the second SRS resource set. The third maximum number of transmission layers is the maximum number of transmission layers associated with the single-TRP transmission scheme, the single-antenna panel transmission scheme or the TDM transmission scheme.

In some embodiments, in a case where the first indication information field is not present, or the first indication information field is present and the first indication information field indicates a first state or a second state, the number of bits of the first TPMI field is determined according to the third maximum number of transmission layers; or

in a case where the first indication information field is present, and the first indication information field indicates a third state or a fourth state, the number of bits of the first TPMI field is determined according to the first maximum number of transmission layers.

In some embodiments, the number of bits of the first TPMI field is determined according to a larger value between the first maximum number of transmission layers and the third maximum number of transmission layers.

In some embodiments, in a case where the first indication information field is present, and the first indication information field indicates the first state or the second state, the first TPMI field includes N1 bits, and a state corresponding to the N1 bits is used to indicate precoding information and number of transmission layers information, N1 being a positive integer; or

in a case where the first indication information field is present and the first indication information field indicates the third state or the fourth state, the first TPMI field includes N2 bits and N3 bits. A state corresponding to the N2 bits is used to indicate the precoding information and the number of transmission layers information, and a state corresponding to the N3 bits is a reserved state, N2 and N3 being positive integers.

N1=N2+N3, N1 is determined according to the larger value between the first maximum number of transmission layers and the third maximum number of transmission layers, and N2 is determined based on a smaller value between the first maximum number of transmission layers and the third maximum number of transmission layers.

In some embodiments, the third maximum number of transmission layers is greater than the first maximum number of transmission layers.

In some embodiments, in a case where the first indication information field is present and the first indication information field indicates the first state or the second state, the first TPMI field includes N4 bits and N5 bits, where a state corresponding to the N4 bits is used to indicate the precoding information and the number of transmission layers information, and a state corresponding to the N5 bits is a reserved state; or

in a case where the first indication information field is present and the first indication information field indicates the third state or the fourth state, the first TPMI field includes N6 bits, and a state corresponding to the N6 bits is used to indicate the precoding information and the number of transmission layers information.

N6=N4+N5, N6 is determined according to the larger value between the first maximum number of transmission layers and the third maximum number of transmission layers, and N4 is determined according to the smaller value between the first maximum number of transmission layers and the third maximum number of transmission layers.

In some embodiments, the third maximum number of transmission layers is smaller than the first maximum number of transmission layers.

In some embodiments, in a case where the third maximum number of transmission layers is equal to the first maximum number of transmission layers, and the first indication information field is present and the first indication information field indicates the first state, the second state, the third state or the fourth state, the first TPMI field includes N7 bits. A state corresponding to the N7 bits is used to indicate the precoding information and the number of transmission layers information, and N7 is determined according to the first maximum number of transmission layers or the third maximum number of transmission layers.

In some embodiments, the one or more uplink transmissions include an uplink transmission under the single-TRP transmission scheme, an uplink transmission under the single-antenna panel transmission scheme, an uplink transmission under the TDM transmission scheme, uplink transmissions under an SDM transmission scheme, or uplink transmissions under an SFN transmission scheme.

In some embodiments, the number of bits of the second TMPI field is determined according to a second maximum number of transmission layers and/or the first indication information field, and the second maximum number of transmission layers is the maximum number of transmission layers associated with the second SRS resource set.

In some embodiments, in a case where the first indication information field is not present, or the first indication information field is present and the first indication information field indicates the first state or the second state, the number of bits of the second TPMI field is 0, or the second TPMI field is a reserved field; or

in a case where the first indication information field is present and the first indication information field indicates the third state or the fourth state, the number of bits of the second TPMI field is determined according to the second maximum number of transmission layers.

In some embodiments, the one or more uplink transmissions are uplink transmissions under the SDM transmission scheme.

In some embodiments, the number of bits of the second TMPI field is determined according to the first maximum number of transmission layers and/or the first indication information field.

The first maximum number of transmission layers is a maximum number of transmission layers associated with the first SRS resource set and the second SRS resource set.

In some embodiments, in a case where the first indication information field is not present, or the first indication information field is present and the first indication information field indicates the first state or the second state, the number of bits of the second TPMI field is 0, or the second TPMI field is a reserved field. Alternatively, in a case where the first indication information field is present and the first indication information field indicates the third state or the fourth state, the number of bits of the second TPMI field is determined according to the first maximum number of transmission layers.

In some embodiments, the one or more uplink transmissions are uplink transmissions under the SFN transmission scheme.

In some embodiments, the number of bits of the first SRI field is determined according to at least one of the first indication information field, the first maximum number of transmission layers, or the third maximum number of transmission layers. The first maximum number of transmission layers is the maximum number of transmission layers associated with the first SRS resource set, or the first maximum number of transmission layers is the maximum number of transmission layers associated with the first SRS resource set and the second SRS resource set; and the third maximum number of transmission layers is the maximum number of transmission layers associated with the single-TRP transmission scheme, the single-antenna panel transmission scheme or the TDM transmission scheme.

In some embodiments, in a case where the first indication information field is present, the number of bits of the first SRI field is determined according to a number of SRS resources that are configured in an SRS resource set indicated by the first indication information field; or

in a case where the first indication information field is not present, the number of bits of the first SRI field is determined according to a number of SRS resources that are configured in an SRS resource set configured by higher layer signaling.

In some embodiments, the one or more uplink transmissions are codebook-based uplink transmissions.

In some embodiments, in a case where the first indication information field is present and the first indication information field indicates the first state or the second state, the number of bits of the first SRI field is determined according to the number of SRS resources that are configured in the SRS resource set indicated by the first indication information field and the third maximum number of transmission layers;

in a case where the first indication information field is present and the first indication information field indicates the third state or the fourth state, the number of bits of the first SRI field is determined according to the number of SRS resources that are configured in the SRS resource set indicated by the first indication information field and the first maximum number of transmission layers; or

in a case where the first indication information field is not present, the number of bits of the first SRI field is determined according to the number of SRS resources that are configured in the SRS resource set configured by higher layer signaling and the third maximum number of transmission layers.

In some embodiments, the one or more uplink transmissions are non-codebook-based uplink transmissions.

In some embodiments, the number of bits of the first SRI field is determined according to the larger value between the first maximum number of transmission layers and the third maximum number of transmission layers.

In some embodiments, in a case where the first indication information field is present and the first indication information field indicates the first state or the second state, the first SRI field includes M1 bits, and a state corresponding to the M1 bits is used to indicate one or more SRS resources, M1 being a positive integer; or

in a case where the first indication information field is present and the first indication information field indicates the third state or the fourth state, the first SRI field includes M2 bits and M3 bits, where a state corresponding to the M2 bits is used to indicate one or more SRS resources, and a state corresponding to the M3 bits is a reserved state, M2 and M3 being positive integers.

M1=M2+M3, M1 is determined according to the larger value between the first maximum number of transmission layers and the third maximum number of transmission layers, and M2 is determined according to the smaller value between the first maximum number of transmission layers and the third maximum number of transmission layers.

In some embodiments, the third maximum number of transmission layers is greater than the first maximum number of transmission layers.

In some embodiments, in a case where the first indication information field is present and the first indication information field indicates the first state or the second state, the first SRI field includes M4 bits and M5 bits, where a state corresponding to the M4 bits is used to indicate one or more SRS resources, and a state corresponding to the M5 bits is a reserved state; or

in a case where the first indication information field is present and the first indication information field indicates the third state or the fourth state, the first SRI field includes M6 bits, and a state corresponding to the M6 bits is used to indicate one or more SRS resources.

M6=M4+M5, M6 is determined according to the larger value between the first maximum number of transmission layers and the third maximum number of transmission layers, and M4 is determined according to the smaller value between the first maximum number of transmission layers and the third maximum number of transmission layers.

In some embodiments, the third maximum number of transmission layers is smaller than the first maximum number of transmission layers.

In some embodiments, in a case where the third maximum number of transmission layers is equal to the first maximum number of transmission layers, and the first indication information field is present and the first indication information field indicates the first state, the second state, the third state or the fourth state, the first SRI field includes M7 bits. A state corresponding to the M7 bits is used to indicate one or more SRS resources, and M7 is determined according to the first maximum number of transmission layers or the third maximum number of transmission layers.

In some embodiments, the one or more uplink transmissions include an uplink transmission under the single-TRP transmission scheme, an uplink transmission under the single antenna panel transmission scheme, an uplink transmission under the TDM transmission scheme, uplink transmissions under the SDM transmission scheme, or uplink transmissions under the SFN transmission scheme.

In some embodiments, the number of bits of the second SRI field is determined according to the second maximum number of transmission layers and/or the first indication information field, and the second maximum number of transmission layers is the maximum number of transmission layers associated with the second SRS resource set.

In some embodiments, in a case where the first indication information field is not present, or the first indication information field is present and the first indication information field indicates the third state or the fourth state, the number of bits of the second SRI field is determined according to the number of SRS resources that are configured in the SRS resource set indicated by the first indication information field; or

in a case where the first indication information field is not present, or the first indication information field is present and the first indication information field indicates the first state or the second state, the number of bits of the second SRI field is 0.

In some embodiments, the one or more uplink transmissions are codebook-based uplink transmissions.

In some embodiments, in a case where the first indication information field is not present, or the first indication information field is present and the first indication information field indicates the first state or the second state, the number of bits of the second SRI field is 0 or a reserved field; or

in a case where the first indication information field is present and the first indication information field indicates the third state or the fourth state, the number of bits of the second SRI field is determined according to the number of SRS resources that are configured in the SRS resource set indicated by the first indication information field and the second maximum number of transmission layers.

In some embodiments, the one or more uplink transmissions are non-codebook-based uplink transmissions.

In some embodiments, the second SRI field is determined according to the first maximum number of transmission layers and/or the first indication information field, and the first maximum number of transmission layers is the maximum number of transmission layers associated with the first SRS resource set and the second SRS resource set.

In some embodiments, in a case where the first indication information field is not present, or the first indication information field is present and the first indication information field indicates the third state or the fourth state, the number of bits of the second SRI field is determined according to the number of SRS resources that are configured in the SRS resource set indicated by the first indication information field; or

in a case where the first indication information field is not present, or the first indication information field is present and the first indication information field indicates the first state or the second state, the number of bits of the second SRI field is 0.

In some embodiments, the one or more uplink transmissions are codebook-based uplink transmissions.

In some embodiments, in a case where the first indication information field is not present, or the first indication information field is present and the first indication information field indicates the first state or the second state, the number of bits of the second SRI field is 0 or a reserved field; or

in a case where the first indication information field is present and the first indication information field indicates the third state or the fourth state, the number of bits of the second SRI field is determined according to the number of SRS resources that are configured in the SRS resource set indicated by the first indication information field and the first maximum number of transmission layers.

In some embodiments, the one or more uplink transmissions are non-codebook-based uplink transmissions.

In some embodiments, the number of bits of the first PTRS-DMRS association field is determined according to at least one of the first maximum number of transmission layers, the second maximum number of transmission layers, or the third maximum number of transmission layers.

The number of bits of the second PTRS-DMRS association field is determined according to the first maximum number of transmission layers, the second maximum number of transmission layers, the third maximum number of transmission layers and the first indication information field.

The first maximum number of transmission layers is the maximum number of transmission layers associated with the first SRS resource set, the second maximum number of transmission layers is the maximum number of transmission layers associated with the second SRS resource set, and the third maximum number of transmission layers is the maximum number of transmission layers associated with the single-TRP transmission scheme, the single-antenna panel transmission scheme or the TDM transmission scheme.

In some embodiments, in a case where the first maximum number of transmission layers, the second maximum number of transmission layers and the third maximum number of transmission layers are all 1, the number of bits of the first PTRS-DMRS association field is 0 bit.

In some embodiments, in a case where the first indication information field is present and a first condition is met, the number of bits of the first PTRS-DMRS association field is 2 bits, and the first condition includes at least one of: the third maximum number of transmission layers being greater than or equal to 2, the first maximum number of transmission layers being greater than or equal to 2, or the second maximum number of transmission layers being greater than or equal to 2.

In some embodiments, in a case where the first indication information field is present, the first indication information field indicates the third state or the fourth state, and one of the first maximum number of transmission layers and the second maximum number of transmission layers is equal to 1 and another of the first maximum number of transmission layers and the second maximum number of transmission layers is equal to 2, a bit in the first PTRS-DMRS association field, associated with an SRS resource set that is associated with a maximum number of transmission layers equal to 1 of the first maximum number of transmission layers and the second maximum number of transmission layers, is a reserved bit.

In some embodiments, in a case where the first indication information field is not present, the second PTRS-DMRS association field is 0 bit;

in a case where the SDM transmission scheme is employed for the one or more uplink transmissions, the second PTRS-DMRS association field is 0 bit;

in a case where the first indication information field is present and the first maximum number of transmission layers or the second maximum number of transmission layers is smaller than or equal to 2, the second PTRS-DMRS association field is 0 bit; or

in a case where the first indication information field is present and the first maximum number of transmission layers or the second maximum number of transmission layers is greater than 2, the second PTRS-DMRS association field is 2 bits.

In some embodiments, the one or more uplink transmissions are uplink transmissions under the SDM transmission scheme.

In some embodiments, the number of bits of the first PTRS-DMRS association field is determined according to the first maximum number of transmission layers and/or the third maximum number of transmission layers.

The number of bits of the second PTRS-DMRS association field is determined according to at least one of the first maximum number of transmission layers, the third maximum number of transmission layers, or the first indication information field.

The first maximum number of transmission layers is the maximum number of transmission layers associated with the first SRS resource set and the second SRS resource set, and the third maximum number of transmission layers is the maximum number of transmission layers associated with the single-TRP transmission scheme, the single-antenna panel transmission scheme or the TDM transmission scheme.

In some embodiments, in a case where both the first maximum number of transmission layers and the third maximum number of transmission layers are 1, the number of bits of the first PTRS-DMRS association field is 0 bit.

In some embodiments, in a case where the first indication information field is present and a second condition is met, the number of bits of the first PTRS-DMRS association field is 2 bits. The second condition includes: the third maximum number of transmission layers being greater than or equal to 2, and/or the first maximum number of transmission layers being greater than or equal to 2.

In some embodiments, in a case where the first indication information field is present, the first indication information field indicates the third state or the fourth state, and the first maximum number of transmission layers is equal to 1, the first PTRS-DMRS association field is a reserved field.

In some embodiments, in a case where the first indication information field is not present, the second PTRS-DMRS association field is 0 bit;

in a case where the SFN transmission scheme is employed for the one or more uplink transmissions, the second PTRS-DMRS association field is 0 bit;

in a case where the first indication information field is present and the first maximum number of transmission layers is smaller than or equal to 2, the second PTRS-DMRS association field is 0 bit; or

in a case where the first indication information field is present and the first maximum number of transmission layers is greater than 2, the second PTRS-DMRS association field is 2 bits.

In some embodiments, the one or more uplink transmissions are uplink transmissions under the SFN transmission scheme.

In some embodiments, the first indication information field is used to indicate at least one of:

a first state, used to indicate the single-TRP transmission scheme or the single-antenna panel transmission scheme, that the first TPMI field and the first SRI field are associated with the first SRS resource set, and that the second information field is a reserved field;

a second state, used to indicate the single-TRP transmission scheme or the single-antenna panel transmission scheme, that the first TPMI field and the first SRI field are associated with the second SRS resource set, and that the second information field is a reserved field;

a third state, used to indicate the SDM transmission scheme or the SFN transmission scheme, that the first TPMI field and the first SRI field are associated with the first SRS resource set, and that the second TPMI field and the second SRI field are associated with the second SRS resource set; or

a fourth state, used to indicate the SDM transmission scheme or the SFN transmission scheme, that the first TPMI field and the first SRI field are associated with the second SRS resource set, and that the second TPMI field and the second SRI field are associated with the first SRS resource set.

In some embodiments, the first indication information field is used to indicate at least one of: the first state, used to indicate the single-TRP transmission scheme or the single-antenna panel transmission scheme, that the first TPMI field and the first SRI field are associated with the first SRS resource set, and that the second information field is a reserved field;

the second state, used to indicate the single-TRP transmission scheme or the single-antenna panel transmission scheme, that the first TPMI field and the first SRI field are associated with the second SRS resource set, and that the second information field is a reserved field;

the third state, used to indicate the SDM transmission scheme or the SFN transmission scheme, that the first TPMI field and the first SRI field are associated with the first SRS resource set, and that the second TPMI field and the second SRI field are associated with the second SRS resource set; or

a fourth state, the fourth state being a reserved state.

Optionally, in some embodiments, the communication unit may be a communication interface, a transceiver, or an input/output interface of a communication chip or a system on chip. The processing unit may be one or more processors.

It shall be understood that the network device 500 based on the embodiments of the present disclosure may correspond to the network device in the embodiments of the method of the present disclosure. The above and other operations and/or functions of various units in the network device 500 are used for implementing corresponding processes of the network device in the method 200 shown in FIGS. 2 to 4, which will not be repeated here for brevity

FIG. 7 is a schematic diagram illustrating a structure of a communication device 600 provided in the embodiments of the present disclosure. The communication device 600 illustrated in FIG. 7 includes a processor 610, which may call and run a computer program from a memory to implement the method in the embodiments of the present disclosure.

Optionally, as shown in FIG. 7, the communication device 600 may further include a memory 620. The processor 610 may call and run a computer program from the memory 620 to implement the method in the embodiments of the present disclosure.

The memory 620 may be a separate device independent of the processor 610, or the memory 620 may be integrated into the processor 610.

Optionally, as shown in FIG. 7, the communication device 600 may further include a transceiver 630, and the processor 610 may control the transceiver 630 to communicate with other devices. Specifically, the processor 610 may control the transceiver 630 to transmit information or data to other devices, or receive information or data transmitted by other devices.

The transceiver 630 may include a transmitter and a receiver. The transceiver 630 may further include an antenna, and the number of the antennas may be one or more.

Optionally, the communication device 600 may specifically be the network device in the embodiments of the present disclosure, and the communication device 600 may implement corresponding processes implemented by the network device in various methods of the embodiment of the present disclosure, which will not be described in detail here for brevity.

Optionally, the communication device 600 may specifically be the mobile terminal/terminal device in the embodiments of the present disclosure, and the communication device 600 may implement corresponding processes implemented by the mobile terminal/terminal device in various methods of the embodiments of the present disclosure, which will not be described in detail here for brevity.

FIG. 8 is a schematic diagram illustrating a structure of a chip according to embodiments of the present disclosure. The chip 700 shown in FIG. 8 includes a processor 710, and the processor 710 may call and run a computer program from a memory to implement the methods in the embodiments of the present disclosure.

Optionally, as shown in FIG. 8, the chip 700 may further include a memory 720. The processor 710 may call and run a computer program from the memory 720 to implement the methods in the embodiments of the present disclosure.

The memory 720 may be a separate device independent of the processor 710, or the memory 720 may be integrated into the processor 710.

Optionally, the chip 700 may further include an input interface 730. The processor 710 may control the input interface 730 to communicate with other devices or chips. Specifically, the processor 710 may control the input interface 730 to obtain information or data transmitted by other devices or chips.

Optionally, the chip 700 may further include an output interface 740. The processor 710 may control the output interface 740 to communicate with other devices or chips. Specifically, the processor 710 may control the output interface 740 to output information or data to other devices or chips.

Optionally, the chip may be applied to the network device in the embodiments of the present disclosure, and the chip may implement corresponding processes implemented by the network device in various methods in the embodiments of the present disclosure, which will not be repeated here for brevity.

Optionally, the chip may be applied to the mobile terminal/terminal device in the embodiments of the present disclosure, and the chip may implement corresponding processes implemented by the mobile terminal/terminal device in various methods in the embodiments of the present disclosure, which will not be repeated here for brevity.

It shall be understood that the chip in the embodiments of the present disclosure may also be referred to as a system-level chip, a system chip, a chip system or a system-on-chip.

FIG. 9 is a schematic block diagram of a communication system 900 according to embodiments of the present disclosure. As shown in FIG. 9, the communication system 900 includes a terminal device 910 and a network device 920.

The terminal device 910 may be configured to implement the corresponding functions implemented by the terminal device in the above methods, and the network device 920 may be configured to implement the corresponding functions implemented by the network device in the above methods, which will not be repeated here for brevity.

It shall be understood that the processor in the embodiments of the present disclosure may be an integrated circuit chip with a capability for processing signals. In an implementation process, various steps of the above method embodiments may be completed by an integrated logic circuit of hardware in a processor or instructions in a software form. The above processor may be a general-purpose processor, a digital signal processor (DSP), an application specific integrated circuit (ASIC), a field programmable gate array (FPGA) or another programmable logic device, a discrete gate or transistor logic device, or a discrete hardware component. Various methods, steps and logical block diagrams disclosed in the embodiments of the present disclosure may be implement or performed. The general-purpose processor may be a microprocessor, or the processor may be any conventional processor. The steps of the methods disclosed in combination with the embodiments of the present disclosure may be directly embodied by execution of a hardware decoding processor, or by execution of a combination of hardware and software modules in a decoding processor. The software module may be located in a storage medium commonly used in the art, such as a random access memory, a flash memory, a read-only memory, a programmable read-only memory or an electrically erasable programmable memory, or a register. The storage medium is located in a memory, and the processor reads information in the memory and completes the steps of the above methods in combination with hardware of the processor.

It shall be understood that, the memory in the embodiments of the present disclosure may be a volatile memory or a non-volatile memory, or may include both the volatile memory and the non-volatile memory. The non-volatile memory may be a read-only memory (ROM), a programmable ROM (PROM), an erasable PROM (EPROM), an electrically EPROM (EEPROM) or a flash memory. The volatile memory may be a random access memory (RAM), which is used as an external cache. As an example but not as a limitation, many forms of RAMs are available, such as a static RAM (SRAM), a dynamic RAM (DRAM), a synchronous DRAM (SDRAM), a double data rate SDRAM (DDR SDRAM), an enhanced SDRAM (ESDRAM), a synchronous link (Synchlink) DRAM (SLDRAM), and a direct rambus RAM (DR RAM). It shall be noted that the memories in the system and the methods described here are intended to include, but are not limited to, these and any other suitable types of memories.

It will be appreciated that the above memories are exemplary but are not limiting illustration. For example, the memory in embodiments of the present disclosure may be an SRAM, a DRAM, an SDRAM, a DDR SDRAM, an ESDRAM, an SLDRAM, or a DR RAM. That is, the memories in the embodiments of the present disclosure are intended to include, but are not limited to, these and any other suitable types of memories.

The embodiments of the present disclosure further provide a computer-readable storage medium for storing a computer program.

Optionally, the computer-readable storage medium may be applied to the network device in the embodiments of the present disclosure, and the computer program causes a computer to perform the corresponding processes implemented by the network device in the various methods in the embodiments of the present disclosure, which will not be repeated here for brevity.

Optionally, the computer-readable storage medium may be applied to the mobile terminal/terminal device in the embodiments of the present disclosure, and the computer program causes a computer to perform the corresponding processes implemented by the mobile terminal/terminal device in various methods in the embodiments of the present disclosure, which will not be repeated here for brevity.

The embodiments of the present disclosure further provide a computer program product including computer program instructions.

Optionally, the computer program product may be applied to the network device in the embodiments of the present disclosure, and the computer program instructions cause a computer to perform the corresponding processes implemented by the network device in the various methods in the embodiments of the present disclosure, which will not be repeated here for brevity.

Optionally, the computer program product may be applied to the mobile terminal/terminal device in the embodiments of the present disclosure, and the computer program instructions cause a computer to perform the corresponding processes implemented by the mobile terminal/terminal device in various methods in the embodiments of the present disclosure, which will not be repeated here for brevity.

The embodiments of the present disclosure further provide a computer program.

Optionally, the computer program may be applied to the first terminal in the embodiments of the present disclosure, and the computer program, when run on a computer, causes the computer to perform the corresponding processes implemented by the first terminal in various methods in the embodiments of the present disclosure, which will not be repeated here for brevity.

Optionally, the computer program may be applied to the mobile terminal/terminal device in the embodiments of the present disclosure, and the computer program, when run on a computer, causes the computer to perform the corresponding processes implemented by the mobile terminal/terminal device in various methods in the embodiments of the present disclosure, which will not be repeated here for brevity.

Those ordinary skilled in the art will recognize that units and algorithm steps of various examples described in combination with the embodiments disclosed here may be implemented by electronic hardware or a combination of computer software and electronic hardware. Whether these functions are implemented by way of hardware or software depends on a specific application and a design constraint of a technical solution. A skilled person may use different methods to implement the described functions for each specific application, but such implementation shall not be considered beyond the scope of the present disclosure.

It may be clearly understood by those skilled in the art that, for convenience and brevity of the description, the specific working processes of the system, device and unit described above may refer to the corresponding processes in the above method embodiments, which will not be repeated here.

In the several embodiments provided in the application, it shall be understood that the disclosed system, device, and method may be implemented in other ways. For example, the device embodiments described above are only illustrative. For example, division of the units is only a logical function division, and there may be other division manners in actual implementation. For example, a plurality of units or components may be combined or integrated into another system, or some features may be ignored or not executed. In addition, coupling or direct coupling or communication connection shown or discussed between each other may be indirect coupling or communication connection via some interfaces, devices, or units, which may be electrical, mechanical, or in other forms.

The units described as separate components may be or may be not physically separated, and the components shown as units may be or may be not physical units (that is, they may be located in one place or may be distributed on multiple network units). Some or all of units may be selected according to actual needs to achieve purposes of solutions of the embodiments.

In addition, various functional units in various embodiments of the present disclosure may be integrated in one processing unit, various units may be physically present separately, or two or more units may be integrated in one unit.

The functions, if implemented in a form of software functional units and sold or used as an independent product, may be stored in one computer-readable storage medium. With such understanding, the technical solutions of the present disclosure may be embodied in the form of a software product in essence, or a part of the technical solutions that contributes to the prior art or a part of the technical solutions may be embodied in the form of a software product. The computer software product is stored in one storage medium including several instructions for causing a computer device (which may be a personal computer, a server, or a network device) to perform all or some of the steps of the methods described in various embodiments of the present disclosure. The storage medium includes a U disk, a mobile hard disk, an ROM, an RAM, a magnetic disk, an optical disk, or any medium capable of storing program codes.

The foregoing descriptions are merely specific implementations of the present disclosure, but the protection scope of the present disclosure is not limited thereto. Variations or replacements that any person skilled in the art could readily conceive of within the technical scope disclosed in the present disclosure shall fall within the protection scope of the present disclosure. Therefore, the protection scope of the present disclosure shall be subject to the protection scope of the claims.

**Claims**

1. A wireless communication method, comprising:

   determining, by a terminal device, according to first information, a number of bits of a first information field in downlink control information (DCI) and/or a number of bits of a second information field in the DCI, wherein the DCI is used to schedule one or more uplink transmissions, and the first information field and/or the second information field are used to determine a transmission parameter of the one or more uplink transmissions; and the first information comprises at least one of:

   a maximum number of transmission layers associated with a first sounding reference signal (SRS) resource set;
   a maximum number of transmission layers associated with a second SRS resource set;
   a maximum number of transmission layers associated with a single-transmission reception point (TRP) transmission scheme, a single-antenna panel transmission scheme or a time division multiplexing (TDM) transmission scheme; or
   a first indication information field, used to indicate dynamic switching between a first transmission scheme and a second transmission scheme and/or an SRS resource set associated with an uplink transmission under the first transmission scheme, wherein the uplink transmission under the first transmission scheme comprises one uplink transmission, and uplink transmissions under the second transmission scheme comprise a plurality of uplink transmissions.

2. The method according to claim 1, wherein the first information field comprises at least one of a first precoding information and number of layers indicator (TPMI) field, a first SRS resource indicator (SRI) field, or a first phase tracking reference signal and demodulation reference signal (PTRS-DMRS) association field; and the second information field comprises at least one of a second TPMI field, a second SRI field, or a second PTRS-DMRS association field.

3. The method according to claim 2, wherein a number of bits of the first TPMI field is determined according to a first maximum number of transmission layers and/or a third maximum number of transmission layers, wherein the first maximum number of transmission layers is the maximum number of transmission layers associated with the first SRS resource set, or the first maximum number of transmission layers is a maximum number of transmission layers associated with the first SRS resource set and the second SRS resource set, and the third maximum number of transmission layers is the maximum number of transmission layers associated with the single-TRP transmission scheme, the single-antenna panel transmission scheme or the TDM transmission scheme.

4. The method according to claim 3, wherein in a case where the first indication information field is not present, or the first indication information field is present and the first indication information field indicates a first state or a second state, the number of bits of the first TPMI field is determined according to the third maximum number of transmission layers; or in a case where the first indication information field is present and the first indication information field indicates a third state or a fourth state, the number of bits of the first TPMI field is determined according to the first maximum number of transmission layers.

5. The method according to claim 3, wherein the number of bits of the first TPMI field is determined according to a larger value between the first maximum number of transmission layers and the third maximum number of transmission layers.

6. The method according to claim 5, wherein in a case where the first indication information field is present and the first indication information field indicates a first state or a second state, the first TPMI field comprises N1 bits, and a state corresponding to the N1 bits is used to indicate precoding information and number of transmission layers information, N1 being a positive integer; or

in a case where the first indication information field is present and the first indication information field indicates a third state or a fourth state, the first TPMI field comprises N2 bits and N3 bits, wherein a state corresponding to the N2 bits is used to indicate the precoding information and the number of transmission layers information, and a state corresponding to the N3 bits is a reserved state, N2 and N3 being positive integers, wherein N1=N2+N3, N1 is determined according to the larger value between the first maximum number of transmission layers and the third maximum number of transmission layers, and N2 is determined according to a smaller value between the first maximum number of transmission layers and the third maximum number of transmission layers.

7. The method according to claim 6, wherein the third maximum number of transmission layers is greater than the first maximum number of transmission layers.

8. The method according to claim 5, wherein in a case where the first indication information field is present and the first indication information field indicates a first state or a second state, the first TPMI field comprises N4 bits and N5 bits, wherein a state corresponding to the N4 bits is used to indicate precoding information and number of transmission layers information, and a state corresponding to the N5 bits is a reserved state; or

in a case where the first indication information field is present and the first indication information field indicates a third state or a fourth state, the first TPMI field comprises N6 bits, and a state corresponding to the N6 bits is used to indicate the precoding information and the number of transmission layers information, wherein N6=N4+N5, N6 is determined according to the larger value between the first maximum number of transmission layers and the third maximum number of transmission layers, and N4 is determined according to a smaller value between the first maximum number of transmission layers and the third maximum number of transmission layers.

9. The method according to claim 8, wherein the third maximum number of transmission layers is smaller than the first maximum number of transmission layers.

10. The method according to claim 5, wherein in a case where the third maximum number of transmission layers is equal to the first maximum number of transmission layers, and the first indication information field is present and the first indication information field indicates a first state, a second state, a third state or a fourth state, the first TPMI field comprises N7 bits, wherein a state corresponding to the N7 bits is used to indicate precoding information and number of transmission layers information, and N7 is determined according to the first maximum number of transmission layers or the third maximum number of transmission layers.

11. The method according to any one of claims 3 to 10, wherein the one or more uplink transmissions comprise an uplink transmission under the single-TRP transmission scheme, an uplink transmission under the single-antenna panel transmission scheme, an uplink transmission under the TDM transmission scheme, uplink transmissions under a spatial division multiplexing (SDM) transmission scheme, or uplink transmissions under a single frequency network (SFN) transmission scheme.

12. The method according to any one of claims 2 to 11, wherein a number of bits of the second TMPI field is determined according to a second maximum number of transmission layers and/or the first indication information field, and the second maximum number of transmission layers is the maximum number of transmission layers associated with the second SRS resource set.

13. The method according to claim 12, wherein in a case where the first indication information field is not present, or the first indication information field is present and the first indication information field indicates a first state or a second state, the number of bits of the second TPMI field is 0, or the second TPMI field is a reserved field; or
in a case where the first indication information field is present and the first indication information field indicates a third state or a fourth state, the number of bits of the second TPMI field is determined according to the second maximum number of transmission layers.

14. The method according to claim 12 or 13, wherein the one or more uplink transmissions are uplink transmissions under an SDM transmission scheme.

15. The method according to any one of claims 2 to 11, wherein a number of bits of the second TMPI field is determined according to the first maximum number of transmission layers and/or the first indication information field, wherein the first maximum number of transmission layers is a maximum number of transmission layers associated with the first SRS resource set and the second SRS resource set.

16. The method according to claim 15, wherein in a case where the first indication information field is not present, or the first indication information field is present and the first indication information field indicates a first state or a second state, the number of bits of the second TPMI field is 0, or the second TPMI field is a reserved field; or
in a case where the first indication information field is present and the first indication information field indicates a third state or a fourth state, the number of bits of the second TPMI field is determined according to the first maximum number of transmission layers.

17. The method according to claim 15 or 16, wherein the one or more uplink transmissions are uplink transmissions under an SFN transmission scheme.

18. The method according to any one of claims 2 to 17, wherein a number of bits of the first SRI field is determined according to at least one of the first indication information field, a first maximum number of transmission layers or a third maximum number of transmission layers, wherein the first maximum number of transmission layers is the maximum number of transmission layers associated with the first SRS resource set, or the first maximum number of transmission layers is a maximum number of transmission layers associated with the first SRS resource set and the second SRS resource set, and the third maximum number of transmission layers is the maximum number of transmission layers associated with the single-TRP transmission scheme, the single-antenna panel transmission scheme or the TDM transmission scheme.

19. The method according to claim 18, wherein in a case where the first indication information field is present, a number of bits of the first SRI field is determined according to a number of SRS resources that are configured in an SRS resource set indicated by the first indication information field; or
in a case where the first indication information field is not present, the number of bits of the first SRI field is determined according to a number of SRS resources that are configured in an SRS resource set configured by higher layer signaling.

20. The method according to claim 19, wherein the one or more uplink transmissions are codebook-based uplink transmissions.

21. The method according to claim 18, wherein in a case where the first indication information field is present and the first indication information field indicates a first state or a second state, the number of bits of the first SRI field is determined according to a number of SRS resources that are configured in an SRS resource set indicated by the first indication information field and the third maximum number of transmission layers;

in a case where the first indication information field is present and the first indication information field indicates a third state or a fourth state, the number of bits of the first SRI field is determined according to the number of SRS resources that are configured in the SRS resource set indicated by the first indication information field and the first maximum number of transmission layers; or
in a case where the first indication information field is not present, the number of bits of the first SRI field is determined according to a number of SRS resources that are configured in an SRS resource set configured by higher layer signaling and the third maximum number of transmission layers.

22. The method according to claim 21, wherein the one or more uplink transmissions are non-codebook-based uplink transmissions.

23. The method according to claim 18, wherein the number of bits of the first SRI field is determined according to a larger value between the first maximum number of transmission layers and the third maximum number of transmission layers.

24. The method according to claim 23, wherein in a case where the first indication information field is present and the first indication information field indicates a first state or a second state, the first SRI field comprises M1 bits, and a state corresponding to the M1 bits is used to indicate one or more SRS resources, M1 being a positive integer; or

in a case where the first indication information field is present and the first indication information field indicates a third state or a fourth state, the first SRI field comprises M2 bits and M3 bits, wherein a state corresponding to the M2 bits is used to indicate one or more SRS resources, and a state corresponding to the M3 bits is a reserved state, M2 and M3 being positive integers, wherein M1=M2+M3, M1 is determined according to the larger value between the first maximum number of transmission layers and the third maximum number of transmission layers, and M2 is determined according to a smaller value between the first maximum number of transmission layers and the third maximum number of transmission layers.

25. The method according to claim 24, wherein the third maximum number of transmission layers is greater than the first maximum number of transmission layers.

26. The method according to claim 23, wherein in a case where the first indication information field is present and the first indication information field indicates a first state or a second state, the first SRI field comprises M4 bits and M5 bits, wherein a state corresponding to the M4 bits is used to indicate one or more SRS resources, and a state corresponding to the M5 bits is a reserved state; or

in a case where the first indication information field is present and the first indication information field indicates a third state or a fourth state, the first SRI field comprises M6 bits, and a state corresponding to the M6 bits is used to indicate one or more SRS resources, wherein M6=M4+M5, M6 is determined according to the larger value between the first maximum number of transmission layers and the third maximum number of transmission layers, and M4 is determined according to a smaller value between the first maximum number of transmission layers and the third maximum number of transmission layers.

27. The method according to claim 26, wherein the third maximum number of transmission layers is smaller than the first maximum number of transmission layers.

28. The method according to claim 23, wherein in a case where the third maximum number of transmission layers is equal to the first maximum number of transmission layers, and the first indication information field is present and the first indication information field indicates a first state, a second state, a third state or a fourth state, the first SRI field comprises M7 bits, wherein a state corresponding to the M7 bits is used to indicate one or more SRS resources, and M7 is determined according to the first maximum number of transmission layers or the third maximum number of transmission layers.

29. The method according to any one of claims 18 to 28, wherein the one or more uplink transmissions comprise an uplink transmission under the single-TRP transmission scheme, an uplink transmission under the single-antenna panel transmission scheme, an uplink transmission under the TDM transmission scheme, uplink transmissions under an SDM transmission scheme, or uplink transmissions under an SFN transmission scheme.

30. The method according to any one of claims 2 to 29, wherein a number of bits of the second SRI field is determined according to a second maximum number of transmission layers and/or the first indication information field, and the second maximum number of transmission layers is the maximum number of transmission layers associated with the second SRS resource set.

31. The method according to claim 30, wherein in a case where the first indication information field is not present, or the first indication information field is present and the first indication information field indicates a third state or a fourth state, the number of bits of the second SRI field is determined according to a number of SRS resources that are configured in an SRS resource set indicated by the first indication information field; or in a case where the first indication information field is not present, or the first indication information field is present and the first indication information field indicates a first state or a second state, the number of bits of the second SRI field is 0.

32. The method according to claim 31, wherein the one or more uplink transmissions are codebook-based uplink transmissions.

33. The method according to claim 30, wherein in a case where the first indication information field is not present, or the first indication information field is present and the first indication information field indicates a first state or a second state, the number of bits of the second SRI field is 0 or a reserved field; or in a case where the first indication information field is present and the first indication information field indicates a third state or a fourth state, the number of bits of the second SRI field is determined according to a number of SRS resources that are configured in an SRS resource set indicated by the first indication information field and the second maximum number of transmission layers.

34. The method according to claim 33, wherein the one or more uplink transmissions are non-codebook-based uplink transmissions.

35. The method according to any one of claims 2 to 29, wherein the second SRI field is determined according to the first maximum number of transmission layers and/or the first indication information field, and the first maximum number of transmission layers is a maximum number of transmission layers associated with the first SRS resource set and the second SRS resource set.

36. The method according to claim 35, wherein in a case where the first indication information field is not present, or the first indication information field is present and the first indication information field indicates a third state or a fourth state, the number of bits of the second SRI field is determined according to a number of SRS resources that are configured in an SRS resource set indicated by the first indication information field; or
in a case where the first indication information field is not present, or the first indication information field is present and the first indication information field indicates a first state or a second state, the number of bits of the second SRI field is 0.

37. The method according to claim 36, wherein the one or more uplink transmissions are codebook-based uplink transmissions.

38. The method according to claim 35, wherein in a case where the first indication information field is not present, or the first indication information field is present and the first indication information field indicates a first state or a second state, the number of bits of the second SRI field is 0 or a reserved field; or
in a case where the first indication information field is present and the first indication information field indicates a third state or a fourth state, the number of bits of the second SRI field is determined according to a number of SRS resources that are configured in an SRS resource set indicated by the first indication information field and the first maximum number of transmission layers.

39. The method according to claim 38, wherein the one or more uplink transmissions are non-codebook-based uplink transmissions.

40. The method according to any one of claims 2 to 39, wherein a number of bits of the first PTRS-DMRS association field is determined according to at least one of a first maximum number of transmission layers, a second maximum number of transmission layers, or a third maximum number of transmission layers; and

a number of bits of the second PTRS-DMRS association field is determined according to the first maximum number of transmission layers, the second maximum number of transmission layers, the third maximum number of transmission layers and the first indication information field, wherein
the first maximum number of transmission layers is the maximum number of transmission layers associated with the first SRS resource set, the second maximum number of transmission layers is the maximum number of transmission layers associated with the second SRS resource set, and the third maximum number of transmission layers is the maximum number of transmission layers associated with the single-TRP transmission scheme, the single-antenna panel transmission scheme or the TDM transmission scheme.

41. The method according to claim 40, wherein in a case where the first maximum number of transmission layers, the second maximum number of transmission layers and the third maximum number of transmission layers are all 1, the number of bits of the first PTRS-DMRS association field is 0 bit.

42. The method according to claim 40, wherein in a case where the first indication information field is present and a first condition is met, the number of bits of the first PTRS-DMRS association field is 2 bits, wherein the first condition comprises at least one of the third maximum number of transmission layers being greater than or equal to 2, the first maximum number of transmission layers being greater than or equal to 2, or the second maximum number of transmission layers being greater than or equal to 2.

43. The method according to claim 40, wherein in a case where the first indication information field is present, the first indication information field indicates a third state or a fourth state, and one of the first maximum number of transmission layers and the second maximum number of transmission layers is equal to 1 and another of the first maximum number of transmission layers and the second maximum number of transmission layers is equal to 2, a bit in the first PTRS-DMRS association field, associated with an SRS resource set that is associated with a maximum number of transmission layers equal to 1 of the first maximum number of transmission layers and the second maximum number of transmission layers, is a reserved bit.

44. The method according to any one of claims 40 to 43, wherein in a case where the first indication information field is not present, the second PTRS-DMRS association field is 0 bit;

in a case where an SDM transmission scheme is employed for the one or more uplink transmissions, the second PTRS-DMRS association field is 0 bit;
in a case where the first indication information field is present and the first maximum number of transmission layers or the second maximum number of transmission layers is smaller than or equal to 2, the second PTRS-DMRS association field is 0 bit; or
in a case where the first indication information field is present and the first maximum number of transmission layers or the second maximum number of transmission layers is greater than 2, the second PTRS-DMRS association field is 2 bits.

45. The method according to any one of claims 40 to 44, wherein the one or more uplink transmissions are uplink transmissions under an SDM transmission scheme.

46. The method according to any one of claims 2 to 39, wherein a number of bits of the first PTRS-DMRS association field is determined according to a first maximum number of transmission layers and/or a third maximum number of transmission layers; and

a number of bits of the second PTRS-DMRS association field is determined according to at least one of the first maximum number of transmission layers, the third maximum number of transmission layers or the first indication information field, wherein
the first maximum number of transmission layers is a maximum number of transmission layers associated with the first SRS resource set and the second SRS resource set, and the third maximum number of transmission layers is the maximum number of transmission layers associated with the single-TRP transmission scheme, the single-antenna panel transmission scheme or the TDM transmission scheme.

47. The method according to claim 46, wherein in a case where both the first maximum number of transmission layers and the third maximum number of transmission layers are 1, the number of bits of the first PTRS-DMRS association field is 0 bit.

48. The method according to claim 46, wherein in a case where the first indication information field is present and a second condition is met, the number of bits of the first PTRS-DMRS association field is 2 bits, wherein the second condition comprises the third maximum number of transmission layers being greater than or equal to 2, and/or the first maximum number of transmission layers being greater than or equal to 2.

49. The method according to claim 46, wherein in a case where the first indication information field is present, the first indication information field indicates a third state or a fourth state, and the first maximum number of transmission layers is equal to 1, the first PTRS-DMRS association field is a reserved field.

50. The method according to any one of claims 45 to 49, wherein in a case where the first indication information field is not present, the second PTRS-DMRS association field is 0 bit;

in a case where an SFN transmission scheme is employed for the one or more uplink transmissions, the second PTRS-DMRS association field is 0 bit;
in a case where the first indication information field is present and the first maximum number of transmission layers is smaller than or equal to 2, the second PTRS-DMRS association field is 0 bit; or
in a case where the first indication information field is present and the first maximum number of transmission layers is greater than 2, the second PTRS-DMRS association field is 2 bits.

51. The method according to any one of claims 46 to 50, wherein the one or more uplink transmissions are uplink transmissions under an SFN transmission scheme.

52. The method according to any one of claims 1 to 51, wherein the first indication information field is used to indicate at least one of:

a first state, used to indicate the single-TRP transmission scheme or the single-antenna panel transmission scheme, that the first TPMI field and the first SRI field are associated with the first SRS resource set, and that the second information field is a reserved field;

a second state, used to indicate the single-TRP transmission scheme or the single-antenna panel transmission scheme, that the first TPMI field and the first SRI field are associated with the second SRS resource set, and that the second information field is a reserved field;

a third state, used to indicate an SDM transmission scheme or an SFN transmission scheme, that the first TPMI field and the first SRI field are associated with the first SRS resource set, and that the second TPMI field and the second SRI field are associated with the second SRS resource set; or

a fourth state, used to indicate the SDM transmission scheme or the SFN transmission scheme, that the first TPMI field and the first SRI field are associated with the second SRS resource set, and that the second TPMI field and the second SRI field are associated with the first SRS resource set.

53. The method according to any one of claims 1 to 51, wherein the first indication information field is used to indicate at least one of:

a first state, used to indicate the single-TRP transmission scheme or the single-antenna panel transmission scheme, that the first TPMI field and the first SRI field are associated with the first SRS resource set, and that the second information field is a reserved field;

a second state, used to indicate the single-TRP transmission scheme or the single-antenna panel transmission scheme, that the first TPMI field and the first SRI field are associated with the second SRS resource set, and that the second information field is a reserved field;

a third state, used to indicate an SDM transmission scheme or an SFN transmission scheme, that the first TPMI field and the first SRI field are associated with the first SRS resource set, and that the second TPMI field and the second SRI field are associated with the second SRS resource set; or

a fourth state, the fourth state being a reserved state.

54. A wireless communication method, comprising:

transmitting, by a network device, downlink control information (DCI) to a terminal device, wherein a number of bits of a first information field in the DCI and/or a number of bits of a second information field in the DCI are determined according to first information, the DCI is used to schedule one or more uplink transmissions, and the first information field and/or the second information field are used to determine a transmission parameter of the one or more uplink transmissions; and

the first information comprises at least one of:

a maximum number of transmission layers associated with a first sounding reference signal (SRS) resource set;

a maximum number of transmission layers associated with a second SRS resource set;

a maximum number of transmission layers associated with a single-transmission reception point (TRP) transmission scheme, a single-antenna panel transmission scheme or a time division multiplexing (TDM) transmission scheme; or

a first indication information field, used to indicate dynamic switching between a first transmission scheme and a second transmission scheme and/or an SRS resource set associated with an uplink transmission under the first transmission scheme, wherein the uplink transmission under the first transmission scheme comprises one uplink transmission, and uplink transmissions under the second transmission scheme comprise a plurality of uplink transmissions.

55. A terminal device, comprising:

a processing unit, configured to determine a number of bits of a first information field in downlink control information (DCI) and/or a number of bits of a second information field in the DCI according to first information, wherein the DCI is used to schedule one or more uplink transmissions, and the first information field and/or the second information field are used to determine a transmission parameter of the one or more uplink transmissions; and

the first information comprises at least one of:

> a maximum number of transmission layers associated with a first sounding reference signal (SRS) resource set;
> a maximum number of transmission layers associated with a second SRS resource set;
> a maximum number of transmission layers associated with a single-transmission reception point (TRP) transmission scheme, a single-antenna panel transmission scheme or a time division multiplexing (TDM) transmission scheme; or
> a first indication information field, used to indicate dynamic switching between a first transmission scheme and a second transmission scheme and/or an SRS resource set associated with an uplink transmission under the first transmission scheme, wherein the uplink transmission under the first transmission scheme comprises one uplink transmission, and uplink transmissions under the second transmission scheme comprise a plurality of uplink transmissions.

56. A network device, comprising:

> a communication unit, configured to transmit downlink control information (DCI) to a terminal device, wherein a number of bits of a first information field in the DCI and/or a number of bits of a second information field in the DCI are determined according to first information, the DCI is used to schedule one or more uplink transmissions, and the first information field and/or the second information field are used to determine a transmission parameter of the one or more uplink transmissions; and
> the first information comprises at least one of:

>> a maximum number of transmission layers associated with a first sounding reference signal (SRS) resource set;
>> a maximum number of transmission layers associated with a second SRS resource set;
>> a maximum number of transmission layers associated with a single-transmission reception point (TRP) transmission scheme, a single-antenna panel transmission scheme or a time division multiplexing (TDM) transmission scheme; or
>> a first indication information field, used to indicate dynamic switching between a first transmission scheme and a second transmission scheme and/or an SRS resource set associated with an uplink transmission under the first transmission scheme, wherein the uplink transmission under the first transmission scheme comprises one uplink transmission, and uplink transmissions under the second transmission scheme comprise a plurality of uplink transmissions.

57. A terminal device, comprising a processor and a memory, wherein the memory is used to store a computer program, and the processor is used to call and run the computer program stored in the memory to perform the method according to any one of claims 1 to 53.

58. A network device, comprising a processor and a memory, wherein the memory is used to store a computer program, and the processor is used to call and run the computer program stored in the memory to perform the method according to claim 54.

59. A chip, comprising a processor used to call and run a computer program from a memory, to cause a device equipped with the chip to perform the method according to any one of claims 1 to 52 or the method according to claim 54.

60. A computer-readable storage medium, configured to store a computer program, wherein the computer program causes a computer to perform the method according to any one of claims 1 to 53 or the method according to claim 54.

61. A computer program product, comprising computer program instructions that cause a computer to perform the method according to any one of claims 1 to 53 or the method according to claim 54.

62. A computer program, wherein the computer program enables a computer to perform the method according to any one of claims 1 to 53 or the method according to claim 54.

**100**

110

120                                                    120

FIG. 1

200

| Terminal device | Network device |

S210，DCI, used to schedule
one or more uplink transmissions

S220, Determine a number of
bits of a first information
field in the DCI and/or a
number of bits of a second
information in the DCI

FIG. 2

FIG. 3

FIG. 4

Terminal device 400

Processing unit 410

FIG. 5

Network device 500

Communication unit 510

FIG. 6

Communication device 600

Memory 620

Processor 610

Transceiver 630

FIG. 7

Chip 700

Input interface 730

Processor 710

Memory 720

Output interface 740

FIG. 8

Communication system 900

Terminal device

910

Network device

920

FIG. 9

## INTERNATIONAL SEARCH REPORT

| International application No. |
| --- |
| **PCT/CN2023/076275** |

| A. | CLASSIFICATION OF SUBJECT MATTER |
| --- | --- |
| | H04W 72/232(2023.01)i |

According to International Patent Classification (IPC) or to both national classification and IPC

| B. | FIELDS SEARCHED |
| --- | --- |

Minimum documentation searched (classification system followed by classification symbols)

    IPC：H04W

Documentation searched other than minimum documentation to the extent that such documents are included in the fields searched

Electronic data base consulted during the international search (name of data base and, where practicable, search terms used)

    CNABS; CNTXT; VEN; USTXT; EPTXT; WOTXT; ENTXT; CNKI; 3GPP: 下行控制信息, 探测参考信号, 比特数, 层数, 单传输接收点, 多传输接收点, 秩, DCI, SRS, layer, number of bits, STRP, MTRP, rank, maximum, SRI field, TPMI field, PTRS-DMRS association, panel, SDM, SFN

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | WO 2022227033 A1 (GUANGDONG OPPO MOBILE TELECOMMUNICATIONS CORP., LTD.) 03 November 2022 (2022-11-03)<br>    description, page 4, line 47 to page 18, line 27 | 1-62 |
| X | WO 2022227041 A1 (GUANGDONG OPPO MOBILE TELECOMMUNICATIONS CORP., LTD.) 03 November 2022 (2022-11-03)<br>    description, page 4, line 11 to page 27, line 13 | 1-62 |
| X | SHARP. "Enhancements on Multi-TRP for PUSCH"<br>*3GPP TSG RAN WG1 #104bis-e e-Meeting, R1-2103470*, 07 April 2021 (2021-04-07),<br>    sections 2 and 3 | 1-62 |
| A | CN 115278716 A (VIVO COMMUNICATION TECHNOLOGY CO., LTD.) 01 November 2022 (2022-11-01)<br>    entire document | 1-62 |

| ☐ Further documents are listed in the continuation of Box C. | ☑ See patent family annex. |
| --- | --- |

| | |
| --- | --- |
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **25 October 2023** | **03 November 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/076275**

| Patent document cited in search report | Publication date (day/month/year) | Patent family member(s) | Publication date (day/month/year) |
|---|---|---|---|
| WO 2022227033 A1 | 03 November 2022 | None | |
| WO 2022227041 A1 | 03 November 2022 | None | |
| CN 115278716 A | 01 November 2022 | None | |

Form PCT/ISA/210 (patent family annex) (July 2022)